(19) Europäisches Patentamt
European Patent Office
Office européen des brevets

(11) **EP 3 736 608 B1**

(12) **EUROPEAN PATENT SPECIFICATION**

(45) Date of publication and mention
of the grant of the patent:
**01.11.2023 Bulletin 2023/44**

(51) International Patent Classification (IPC):
**G01S 19/39** (2010.01)

(52) Cooperative Patent Classification (CPC):
**G01S 19/393**

(21) Application number: **19305582.9**

(22) Date of filing: **07.05.2019**

(54) **METHOD OF ESTIMATING A CONSTRAINED ZONOTOPE ENCLOSING A STATE REPRESENTING MOTION OF AT LEAST ONE MOBILE TARGET GOVERNED BY A NONLINEAR MODEL**

VERFAHREN ZUM SCHÄTZEN EINES EINGESCHRÄNKTEN ZONOTOPS, DAS EINEN ZUSTAND EINSCHLIESST, DER DIE BEWEGUNG MINDESTENS EINES MOBILEN ZIELS DARSTELLT, DAS DURCH EIN NICHTLINEARES MODELL BESTIMMT WIRD

PROCÉDÉ D'ESTIMATION D'UN ZONOTOPE CONTRAINT RENFERMANT UN ÉTAT REPRÉSENTANT LE MOUVEMENT D'AU MOINS UNE CIBLE MOBILE GOUVERNÉ PAR UN MODÈLE NON-LINÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.11.2020 Bulletin 2020/46**

(73) Proprietors:
• **Institut Supérieur de l'Aéronautique et de l'Espace**
**31400 Toulouse (FR)**
• **Centre National de la Recherche Scientifique (CNRS)**
**75016 Paris (FR)**

(72) Inventors:
• **BOLTING, Jan**
**31400 TOULOUSE (FR)**
• **FERGANI, Soheib**
**31400 TOULOUSE (FR)**

(74) Representative: **Regimbeau**
**20, rue de Chazelles**
**75847 Paris Cedex 17 (FR)**

(56) References cited:
• **REGO BRENNER S ET AL: "Set-based state estimation of nonlinear systems using constrained zonotopes and interval arithmetic*", 2018 EUROPEAN CONTROL CONFERENCE (ECC), EUROPEAN CONTROL ASSOCIATION (EUCA), 12 June 2018 (2018-06-12), pages 1584-1589, XP033455736, DOI: 10.23919/ECC.2018.8550353 [retrieved on 2018-11-27]**
• **REGO BRENNER S ET AL: "Suspended load path tracking control using a tilt-rotor UAV based on zonotopic state estimation", JOURNAL OF THE FRANKLIN INSTITUTE, vol. 356, no. 4, 22 November 2018 (2018-11-22), pages 1695-1729, XP085609301, ISSN: 0016-0032, DOI: 10.1016/J.JFRANKLIN.2018.08.028**
• **DBOUK HANI ET AL: "Reliability and Integrity Measures of GPS Positioning via Geometrical Constraints", ITM 2019 - PROCEEDINGS OF THE 2019 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 31 January 2019 (2019-01-31), pages 730-743, XP056015284, DOI: 10.33012/2019.16722**

- **JOSEPH K. SCOTT ET AL: "Constrained zonotopes: A new tool for set-based estimation and fault detection", AUTOMATICA, vol. 69, 1 July 2016 (2016-07-01), pages 126-136, XP055640586, AMSTERDAM, NL ISSN: 0005-1098, DOI: 10.1016/j.automatica.2016.02.036**

**Description**

## TECHNICAL FIELD

The invention relates to the technical field of set-membership state estimation techniques.

The invention deals with a method of estimating a constrained zonotope containing a state representing motion of at least one mobile target governed by a nonlinear model.

## BACKGROUND

Unmanned vehicles have seen a considerable rise in their level of autonomy over the last years, leading up to present on-going efforts to integrate unmanned aircraft systems (UAS) into the national airspaces and of autonomous cars into the general traffic. It has been known for quite some time that cooperative motion strategies can unlock a number of benefits with considerable economic potential. Automatic platooning of ground vehicles can increase highway capacity, avoid traffic jams and reduce consumption of individual vehicles. Tight formation flight has been demonstrated to enable significant aircraft range enhancements. The most prominent examples include range improvements thanks to the exploitation of wake vortex effects in tight aircraft formations and automatic in-air refueling. To execute these cooperative motion strategies in a safe and efficient manner, relative positions of vehicles need to be estimated with decimeter level, if not centimeter level accuracy.

For tight formation flight, as standalone positioning based on Global Navigation Satellite Systems (GNSS) does not provide the necessary accuracy, a variety of differential positioning techniques has been proposed in the past. Numerous sensor fusion approaches can be found in the literature of the last decades, employing inertial measurement units, differential GNSS with or without exploiting the phase information, machine vision or combinations of both. More recently, inexpensive, decimeter-precision Ultra-Wideband (UWB) ranging sensors have been successfully shown to improve the robustness of airborne Real Time Kinematics (RTK) solutions.

Common among these existing approaches is their reliance on probabilistic filtering techniques such as the Unscented (UKF) or the Extended Kalman Filter (EKF). As is well known, many practical nonlinear estimation problems violate the underlying assumption of both the UKF and the EKF, notably the key assumption of distributions of process model and observation model uncertainties being known. In reality, typically only approximations of the stochastic properties of both sources of uncertainty are available. In spite of this inherent and well-known issue, both EKF and UKF have been demonstrated to work well in practice, providing accurate mean state estimates.

However, when it comes to safe cooperative motion of multiple agents in close proximity, the consistent computation of filter state uncertainty is of even more crucial importance than accurate point estimates. Due to the approximations involved (the linearization steps performed by the EKF and the unscented transform of the UKF), guaranteeing filter consistency is an open problem for nonlinear estimation problems when employing the EKF or UKF. However, we consider algorithms that can compute guaranteed enclosures of vehicle states a key element for the further safe integration of autonomous vehicles into heterogeneous environments such as mixed air traffic and common road traffic.

Set-membership state estimation techniques offer an interesting alternative to probabilistic frameworks in this regard. Document "Set-based state estimation of nonlinear systems using constrained zonotopes and interval arithmetic", by Rego et al., describe such techniques. Set-membership estimators rely on a set-valued process model, assuming that observation and process model uncertainties are contained in known compact sets, e.g. intervals. No assumptions about the error distribution within these sets are required. The exact set-membership estimation problem is usually computationally intractable for nonlinear systems. Research is directed at finding implementable but tight outer approximations of the involved set operations. Numerous algorithms have been proposed over the last decades, employing set shapes such as ellipsoids or intervals. The common challenge all set-membership estimators are facing consists of finding a tradeoff between conservatism - the degree of over-approximation introduced by representing complex sets by simpler, computationally tractable ones - and computational effort.

In spite of the merits of set-membership approaches, their application to relative agent localization has received little attention. A cooperative set-membership localization algorithm for ground vehicles based on the Set Inversion Via Interval Analysis algorithm (SIVIA) has been proposed. SIVIA and related nonlinear set inversion algorithms provide tight enclosures when applied to state estimation algorithms, with their degree of approximation only limited by available computing resources. However, the complexity of these algorithms increases however typically fast with the number of states, limiting their usefulness beyond 2D ground vehicle localization applications.

Ellipsoids provide good computational performance thanks to their constant complexity and have been successfully applied to relative agent localization in simulation. Recently, zonotopes have received increased attention for guaranteed state estimation. Zonotopes provide more flexibility than ellipsoids, their complexity being a design parameter. One inherent problem of zonotopes is their symmetry, which introduces additional conservatism whenever actual state sets exhibit strong asymmetries. A second problem is that the intersection of two zonotopes does not always result in a zonotope, thus, as it is the case for ellipsoids, outer approximations of intermediate sets must be computed at each filter recursion, potentially involving solving a convex optimization problem.

## SUMMARY OF THE INVENTION

The invention aims at solving or at least mitigating both of these deficiencies.

A first aspect of the invention is the method of claim 1.

The a priori zonotope used in the method of claim 1 is a constrained zonotope. This class of zonotopes allows to better approximate asymmetrical set shapes. As an additional advantage, they are closed under intersection and closed under the Minkowski sum operation.

The method according to the first aspect of the invention may comprise the following optional features.

The element at which the nonlinear transition model is linearized may be a center of a smallest interval enclosure containing the first constrained zonotope.

The method may further comprise linearizing a nonlinear observation model at an element of the first constrained zonotope or the a priori zonotope, so as to produce a linear observation model, wherein the observation model used at step e) is the linear observation model produced.

The element at which the nonlinear observation model is linearized may be a center of a smallest interval enclosure containing the a priori zonotope.

The method may further comprise:

- computing observation linearization errors at different elements of the first constrained zonotope or the a priori zonotope, wherein an observation linearization error at a given element of the first constrained zonotope or the a priori zonotope is a difference between an output resulting from applying the nonlinear observation model to the given element and an output resulting from applying the linear observation model to the given element,
- computing a fourth constrained zonotope that contains all the observation linearization errors computed, wherein the a posteriori constrained zonotope depends on the fourth constrained zonotope.

The observation data of the mobile target may have been acquired at a third moment different from the second moment, and the method may further comprises:

- inflating the fourth constrained zonotope so as to obtain an inflated constrained zonotope forming a strip in the state space and taking into account all possible variations of the motion state between the second moment and the third moment, and possibly taking into account measurement noise induced by the sensor,
- computing the a posteriori constrained zonotope as an intersection between the a priori constrained zonotope and the inflated constrained zonotope.

The method may further comprise

- determining a complexity level of the a posteriori constrained zonotope,
- if the complexity level is greater than a threshold, applying a reduction process to the a posteriori constrained zonotope) so as to obtain an a posteriori zonotope having a lower complexity than and containing the a posteriori zonotope before the reduction.

The method may further comprise using the a posteriori constrained zonotope as first constrained zonotope and using the second moment as first moment in a subsequent execution of steps a) to e) defined in claim 1.

The method may further comprise

- computing a maximum time interval between the first moment and a moment at which the observation data has been acquired by the sensor,
- if the maximum time interval is greater than a predetermined duration, applying the linear transition model to the predetermined constrained zonotope so as to produce the a priori constrained zonotope, else using the predetermined constrained zonotope as the a priori constrained zonotope.

The observation data may comprise at least one of the following data acquired by a GNSS receiver: a pseudo-range, a carrier phase acquired, a range between the mobile target and another mobile target.

The motion data may include motion data of the mobile target relative to another mobile target.

The first constrained zonotope may be computed using a Vector Set Inverter Via Interval Analysis algorithm.

A second aspect of the invention is a computer program product comprising instructions which, when the program is executed by a computer, cause the computer to carry out the method of the first aspect of the invention.

## GENERAL DESCRIPTION OF THE DRAWINGS

**Figure 1** schematically represents a device for estimating a set enclosing the motion state of a mobile target;

**Figure 2** illustrates the steps of an example method for estimating a C-zonotope enclosing a state x of a system;

**Figure 3** illustrates a sequence of operations of a propagation step of the method shown in Figure 2;

**Figure 4** is a graphical representation of the position p and distance d to an x-axis for a target device and for a beacon;

**Figure 5** represents snapshots of the propagation, update and reduction steps of the method shown in Figure 2;

**Figure 6** is a graphical representation of a true state trajectory of the target device;

**Figure 7** is a graphical representation of a CZESMF enclosure of the target device;

**Figure 8** is a graphical representation of a position interval enclosure of the target device;

**Figure 9** is a graphical representation of a velocity interval enclosure of the target device;

**Figure 10** is a graphical representation of the position of another target device;

**Figure 11** represents an interval enclosure of a subpaving obtained by VSIVIA;

**Figure 12** represents an obtained a priori C-zonotope along with an obtained a posteriori C-zonotope and a reduced a posteriori C-zonotope for the target device of Figure 10;

**Figure 13** represents the a priori and a posteriori C-zonotopes in the case of an increased observation timing noise;

**Figure 14** represents a full state enclosure trajectory for the target device of Figure 10;

**Figure 15** represents a full state enclosure trajectory for the target device of Figure 10 in the case of an increased observation timing noise;

**Figure 16** is a graphical representation of two radii of range linearization error interval measurements obtained by two distinct approaches;

**Figure 17** represents the positions of two other target devices during a simulation;

**Figure 18** represents set volumes obtained by speed norm prediction and by T3D prediction, using a GNSS update or a GNSS+UWB update;

**Figure 19** represents relative position set volumes obtained using a CZESMF filter and using an IESMF filter.

## DETAILED DESCRIPTION OF AT LEAST ONE EMBODIMENT

The following description is structured as follows: After defining notations (section 1) and recalling the problem of set-membership state estimation (section 2), a computationally efficient state set estimation method based on constrained zonotopes (C-zonotopes) will be described (section 3). Then three practical applications of the method will be given as examples:

- a simple 1D example (section 4),
- a slightly more involved 2D localization problem (section 5),
- a 3D peer-to-peer localization benchmark problem using differential GNSS and peer-to-peer ranging observations (section 6).

## 1. Notations

To accommodate this complexity, the notation $x(t_l)$ familiar from continuous-time estimation theory will be used hereinafter. The discrete nature of filter execution is captured by indexing the time. Specifically, $t_k$ designates the time for which *a priori* and *a posteriori* state sets are computed by the processing unit. For a vector $x(t)$, the time $t$ indicates the time of validity of this vector.

Correspondingly, a set $Z(t_k)$ is valid at time $t_k$, i.e. $x(t) \in Z(t_k)$ if $t = t_k$. If the time of validity is an interval $[t_k]$, the set is valid for all times in this interval, i.e. $x(t) \in Z(t_k)$ if $t \in [t_k]$.

Besides, a matrix $J_{nxm}$ denotes a matrix of n rows and m columns where all elements are one. The identity matrix of size n is denoted by $I_n$ and a square zero matrix of size n by $0_n$.

The dot product of two vectors $a, a$ is denoted $< a, b >$.

Interval matrices are denoted by $[M] = [\underline{M}, \overline{M}]$ where the elements of $\underline{M}, \overline{M} \in \mathbb{R}^{n \times m}$ are real lower and upper bounds, respectively, of the interval element of $[M]$. For m = 1 and $n > 1$ we speak of an interval vector, i.e. $[p]$. Scalar intervals are denoted by $[x] = [\underline{x}, \overline{x}]$ where lower and upper bounds $\underline{x}, \overline{x} \in \mathbb{R}$. For an interval $[M]$, $M$ denotes a realization of the interval, i.e. $M \in [M]$.

Where additive errors are assumed, it can be more convenient to write interval matrices in center-range notation as $[M] = mid(M) + [-rad(M), rad(M)]$, where $mid(M)$ is the center point of $[M]$ and the interval radius matrix is given by $rad(M) = \overline{M} - mid(M)$. Wherever terms and interval terms appear in the same expression, such as $[c] = a + [b]$, it is assumed that the terms (a) represent degenerate intervals ($[a, a]$) and all operations in the expression are interval operations.

As C-zonotopes are not closed under nonlinear transforms, first order Taylor approximations of nonlinear system equations are used in the following, see sections 3.2 and 3.3. To ensure that these approximations do not compromise the consistency of the resulting state enclosures, the concept of linear inclusion is used, as do other set estimation approaches, see e.g. "A nonlinear set-membership filter for online applications", by E. Scholte et al. A linear inclusion of a nonlinear function is a set-valued linear function that is guaranteed to contain the solution of the nonlinear function over a certain input set. As an example, consider the function

$$y = h(x) \qquad (1)$$

With $x \in X$, i.e. x is contained in some compact set $X$. A linear function

$$\hat{y} = y_0 + Hx + \epsilon \qquad (2)$$

is a linear inclusion of equation 1 if

$$y \in y_0 + Hx + [\epsilon] \qquad (3)$$

for all $x \in X$, i.e. the set-valued solution $[\hat{y}]$ of the linear set valued function always contains the nonlinear solution.

## 2. Problem statement

A motion of a mobile target can be described by a motion state comprising motion data. The motion data may for instance include: a position of the target, a speed of the target, an acceleration of the target, other data, or a combination thereof. The motion state evolves over time when the mobile target moves.

In the following, the mobile target 1 may be referred to as the "system", and the motion state as the "state" for the sake of simplicity.

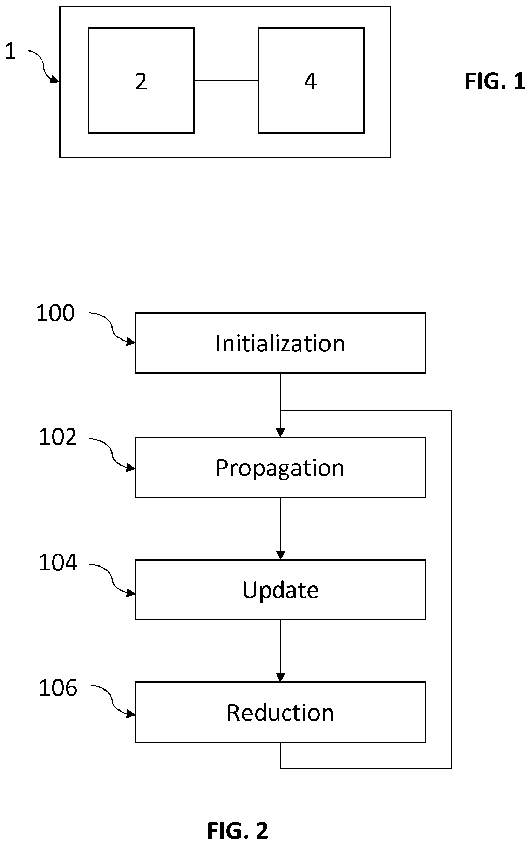

Referring to figure 1, a device 1 for estimating a set enclosing the motion state of the mobile target comprises a processing unit 2 and an observation unit 4.

The processing unit 2 is configured to execute a computer program comprising code instructions implementing an estimation method that will be described hereinafter. This computer program will be referred to as the "CZESMF filter" (Constrained Zonotope Extended Set-membership Filter) or "the filter" hereinafter since it actually acts like a filter.

The filter is configured to use a predetermined transition model (also referred to as "propagation model" or "dynamics model" hereinafter) and a predetermined observation model.

The processing unit 2 is configured to operate at different processing moments, such that different sets enclosing the motion state of the mobile target at said different moments can be estimated.

The processing unit 2 can be of any type: one or more processor, one or more microprocessor, FPGA, ASIC, etc.

The observation unit 4 comprises at least one sensor configured to observe the mobile target. The observation unit 4 is therefore configured to output observation data related to the mobile target. The observation unit is also configured to operate at different observation moments, such that different observations can be acquired at said different moments.

The purpose of set-membership state estimation is computing a region $X(t) \subset \mathbb{R}^n$ in which the state $x(t)$ of the system is guaranteed to reside at a time t.

### 2. 1. State dynamics

In discrete state estimation, it is often assumed that the system state dynamics are governed by a static model of the type

$$x(t_k) = f\big(x(t_{k-1}), u(t_{k-1})\big) + q(t_{k-1}) \qquad (4)$$

with the previous state $x(t_{k-1}) \in \mathbb{R}^n$, the system input $u(t_{k-1}) \in \mathbb{R}^p$, the propagation model error $q(t_{k-1}) \in \mathbb{Q}(t_{k-1}) \subseteq \mathbb{R}^n$, and a constant sampling time $T_s = t_k - t_{k-1}$.

In practice, irregular observation times lead to irregular sampling times, i.e. propagation horizons in the filter. Depending on the sampling time, different propagation models may yield state enclosures of differing tightness. A practical example from navigation is inertial dead-reckoning localization, where the double integration of observed accelerations yields very tight short-term position enclosures, but sensor biases lead to quadratic growth of position enclosures in the long term. In contrast, a simple velocity-norm bound model of vehicle dynamics (see section 5 for an example) leads to linear growth of position enclosures over time, thus possibly providing tighter enclosures for longer propagation horizons.

Another example is treated in section 6, where tight relative position propagations using time differential GNSS phase observations are available only at the GNSS receiver's sampling times, while in between GNSS observations only a crude velocity-norm bound propagation model is available.

We accommodate multiple propagation models by assuming a very general time-varying state dynamics model that is a nonlinear map $\mathbb{R}^n \times \mathbb{R}^p \times \mathbb{R} \times \mathbb{R} \to \mathbb{R}^n$

$$x(t_k) = f(x(t_{k-1}), u(t_{k-1}), t_{k-1}, t_k) + q(t_{k-1}) \qquad (5)$$

The arguments $t_k$ and $t_{k-1}$ indicate that the model performs a propagation of the system state over the time horizon from $t_{k-1}$ to $t_k$ as well as the time-varying nature of $f()$. Thanks to the propagation model being allowed to be time-varying, the filter can employ the least conservative one from a bank of available models at each propagation step 102 (see Fig 2).

### 2.2. Observations

In practice, observations made by the observation unit 4 are often nor perfectly synchronous nor perfectly periodic. As a further complication, the observation times may only be approximately known, e.g. due to lack of hard-real-time communication protocols.

Observation time uncertainty leads to a subtle but serious issue not addressed by existing set-membership state estimation schemes. Propagated state enclosures are guaranteed to contain the state only at the selected propagation time $t_k$. We call this the time of validity of a given state enclosure $\hat{Z}_x(t_k)$. Since an observation corresponds to some unknown time within an interval, updating the *a priori* enclosure with this observation leads to a state enclosure that is not guaranteed to be valid at any time, even if $t_k$ falls within the observation time interval. This is simply due to the fact that $\hat{Z}_x(t_k)$ and the state space constraints corresponding to the observation do not concern the same point in time. Neglecting observation time uncertainty so leads to invalid state enclosures after only one update. A remedy for this issue is presented hereinafter.

The observations are assumed to be governed by the nonlinear map $\mathbb{R}^n \times \mathbb{R}^p \times \mathbb{R} \to \mathbb{R}^{m(t)+1}$

$$\begin{pmatrix} y(t) \\ \hat{t}_y(t) \end{pmatrix} = \begin{pmatrix} h(x(t),u(t),t) + w(t) \\ t + w_t(t) \end{pmatrix} \qquad (6)$$

$$\begin{pmatrix} y_1(t) \\ \vdots \\ y_{m(t)}(t) \\ \hat{t}_y(t) \end{pmatrix} = \begin{pmatrix} h_1(x(t),u(t),t) + w(t) \\ \vdots \\ h_{m(t)}(x(t),u(t),t) + w(t) \\ t + w_t(t) \end{pmatrix} \qquad (7)$$

Where $y(t) \in \mathbb{R}^{m(t)}$ is a vector of sensor observations, $w(t) \in W$ is the corresponding measurement error, $\hat{t}_y(t)$ is the observed observation time stamp, $w_t(t) \in [w_t]$ is the observation time error and $t$ is the true observation time. The observation time stamp error $w_t(t)$ covers not only timing jitter but also communication delays e.g. due to package encoding/decoding delay over a digital data link. All times are wallclock time.

Note that no assumptions are made about the measurement model error other than its being contained in some known set $W(t)$. As such, it covers hardware noise, biases and modeling errors. Note also that both the observation model $h(...)$ and the size $m(t)$ of the observation vector can be time-varying.

While $y(t)$ denotes observations provided by the model, actual measurements received from sensors are denoted by $z(t)$.

### 3. Extended set-membership filter based on C-zonotopes

The most popular computationally efficient set representations used in set state estimation are linear transformations of basic geometric entities, such as ellipsoids - transformed unit hyperballs - and zonotopes - transformed unit hypercubes. The inherent symmetry of both the hyperball and the hypercube limits both the ellipsoid's and the zonotope's ability to tightly approximate asymmetric or generally irregularly shaped sets. Further aggravating the situation, both are not closed under the intersection operation of the filter update. As a consequence, outer approximations of the result of each intersection need to be computed. Constrained zonotopes mitigate both of these issues. They are linear transformations of a constrained unit hypercube and as such can be asymmetric. They are closed under intersection, i.e. the intersection of two C-zonotopes is another C-zonotope, although of higher complexity.

A C-zonotope $Z = \{G, c, A, b\} \subset \mathbb{R}^n$ is defined by its generator matrix $G$, its center c and the constraint parameters $A, b$ of the unit hypercube, and describes the set:

$$Z = \{G\xi + c \mid \|\xi\|_\infty \le 1, A\xi = b\} \qquad (8)$$

Each constraint represents a plane intersecting the unit hypercube. The resulting intersection is then projected via the generator matrix $G$ and finally translated by the center vector c.

C-zonotopes are an alternative parameterization of convex polytopes. Besides, C-zonotopes are a superset of regular zonotopes, as each C-zonotope without constraints is a regular zonotope. For briefness and in accordance with the existing literature, the C-zonotope representation of a convex polytope is denoted as G-rep. and their half-space representation as H-rep.

The interval enclosure of a C-zonotope $Z$ is denoted by $[Z]$ and the G-rep. of an interval $[a]$ by $Z([a])$.

Referring to **figure 2**, a method for estimating a C-zonotope enclosing the state x of the system comprises the following main steps carried by out by the filter, based on a predetermined C-zonotope $Z_x(t_{k-1})$ enclosing the state at time $t_{k-1}$:

- a propagation step 102 wherein the predetermined C-zonotope is processed so as to obtain an *a priori* C-zonotope $\hat{Z}_x(t_k)$ enclosing the state at time $t_k$;
- an update step 104 wherein the *a priori* constrained zonotope $\hat{Z}_x(t_k)$ is combined with observation data acquired by the observation unit 4 so as to obtain an *a posteriori* C-zonotope $Z'_x(t_k)$ enclosing the state at time $t_k$.

The *a posteriori* C-zonotope enclosing the state x at the time $t_k$ and taking into account all observations up to and including $t_k$ is denoted as

$$Z'_x(t_k) = \{G'_x(t_k), c'_x(t_k), A'_x(t_k), b'_x(t_k)\} \quad (9)$$

While the *a priori* C-zonotope enclosing the state x at the time $t_k$, before performing the update, is denoted by

$$\hat{Z}_x(t_k) = \{\hat{G}_x(t_k), \hat{c}_x(t_k), \hat{A}_x(t_k), \hat{b}_x(t_k)\} \quad (10)$$

It will be detailed below that the propagation step 102 and the update step 104 may use a linear transition model and a linear observation model, respectively, said linear models being obtained by linearizing nonlinear models at specific points.
Moreover, the method may further comprise a reduction step 106 wherein the filter converts the *a posteriori* C-zonotope $Z'_x(t_k)$ into another C-zonotope $\hat{Z}_x(t_k)$ of lower complexity but containing the C-zonotope $Z'_x(t_k)$.
The propagation step 102, the update step 104 and the reduction step 106 are repeated recursively. More precisely, the method comprises multiple recursions, each recursion performing the propagation step 102, the update step 104 and the reduction step 106.
The very first recursion of the method is preceded by an initialization step 100 wherein the initial C-zonotope $\hat{Z}_x(t_k)$ is determined.
Steps 100, 102, 104 and 106 will now be described in detail.

### 3.1. Initialization

The initial state is known to be contained in some C-zonotope $\hat{Z}_x(t_k)$, the first *a priori* state enclosure.

### 3.2. Propagation

At the propagation step 102, executed for k >1, the filter computes the *a priori* state set $\hat{Z}_x(t_k)$. It is guaranteed to contain the state at time $t_k > t_{k-1}$, given the preceding *a posteriori* state set $Z_x(t_{k-1})$.
As a particularity of uncertain observations, the question of how to choose the time for which to compute the *a priori* C-zonotope arises. It can even lie in the future at the time when a filter recursion is started, to compensate for filter execution time. Depending on the execution time of the recursion (propagation and update), it can however make more sense to set $t_k$ close to the observation time and perform a final propagation to compensate for execution time.
Some options are a nominal, periodic observation time, if observations are nominally periodic, or the center of observation time intervals. As a beneficial effect of the first choice, filter results become periodic, hiding the observation time uncertainty inside the filter.
Since C-zonotopes are not closed under nonlinear maps, we start, analogous to an Extended Kalman Filter (EKF), by forming a first order Taylor approximation of the state dynamics model equation (5) about an operating point $x(t_{k-1})$, $\hat{u}(t_{k-1})$. The centers of the interval enclosure of the preceding a posteriori state and input enclosures are chosen as operating point:

$$\hat{x}(t_{k-1}) = mid([Z_x(t_{k-1})]) \quad\quad\quad\quad\quad (11)$$

$$\hat{u}(t_{k-1}) = mid([Z_u(t_{k-1})]) \quad\quad \text{where } Z_u = \{G_u, c_u, A_u, b_u\} \quad (12)$$

Since C-zonotope centers do not even necessarily lie within their C-zonotope, this choice tends to lead to smaller, but does not minimize linearization errors.
Linearization leads us to the familiar first order Taylor expansion

$$x(t_k) \quad = f(\hat{x}(t_{k-1}), \hat{u}(t_{k-1}), t_k, t_{k+1}) + q(t_{k-1})$$

$$+ F(t_{k-1})(x(t_{k-1}) - \hat{x}(t_{k-1})) + B(t_{k-1})(u(t_{k-1}) - \hat{u}(t_{k-1}))$$

$$+ q(t_{k-1}) + \varepsilon_f f(t_{k-1}) \qquad\qquad (13)$$

$$= F(t_{k-1})x(t_{k-1}) + B(t_{k-1})u(t_{k-1}) + q(t_{k-1}) + \varepsilon_f f(t_{k-1}) + c_f(t_{k-1}) \qquad (14)$$

Where the linearization error is $\varepsilon_f(t_k) \in [\varepsilon_f(t_k)]$ and with

$$F(t_k) = \frac{\partial f}{\partial x}\Big|_{\cdot x = \hat{x}(t_{k-1})} , \; B(t_k) = \frac{\partial f}{\partial u}\Big|_{\cdot u = \hat{u}(t_{k-1})} \qquad (15)$$

$$c_f(t_{k-1}) = f(\hat{x}(t_{k-1}), \hat{u}(t_{k-1}), t_k, t_{k+1}) - F(t_{k-1})\hat{x}(t_{k-1}) - B(t_{k-1})\hat{u}(t_{k-1}) \qquad (16)$$

The corresponding linear inclusion being given by

$$x(t_k) \in F(t_{k-1})Z_x(t_{k-1}) + B(t_{k-1})Z_u(t_{k-1}) + Z_q(t_{k-1}) + Z([\varepsilon_f(t_{k-1})]) + Z([c_f(t_{k-1})]) \qquad (17)$$

a propagation from time $t_{k-1}$ to time $t_k$ is then performed as

$$\hat{Z}_x(t_k) = F(t_{k-1})Z_x(t_{k-1}) + B(t_{k-1})Z_u(t_{k-1}) + Z_q(t_{k-1}) + Z([\varepsilon_f(t_{k-1})]) + Z([c_f(t_{k-1})]) \qquad (18)$$

The matrix multiplication and sum operations in equation 18 are the set operations on C-zonotopes defined in "Constrained zonotopes: A new tool for set-based estimation and fault detection", by J.K. Scott et al. The linearization error and the model uncertainty of the nonlinear state dynamics model are enclosed by $Z_q(t_{k-1})$ and $Z_u(t_{k-1})$ is a C-zonotope enclosure of any uncertain input. The propagation uncertainty term $q(t_k)$ actually corresponds to the process noise of an EKF, and the C-zonotope $Z_q(t_k)$ corresponds to the process noise covariance matrix Q of an EKF.

$[\varepsilon_f(t_k)]$ can be regarded as a set of transition linearization errors at different elements of C-zonotope $Z_x(t_{k-1})$. A transition linearization error at a given element of $Z_x(t_{k-1})$ is a difference between an output resulting from applying the nonlinear transition model to the given element and an output resulting from applying the linear transition model to the given element.

Besides, the expression $Z_q(t_{k-1}) + Z([\varepsilon_f(t_{k-1})]) + Z([c_f(t_{k-1})])$ above mentioned may be regarded as a C-zonotope that contains all the linearization errors. Moreover, the expression $F(t_{k-1})Z_x(t_{k-1}) + B(t_{k-1})Z_u(t_{k-1})$ can be regarded as a C-zonotope resulting from applying the linear transition model to $Z_x(t_{k-1})$. The a posteriori zonotope is the sum of both expressions.

### 3.2.1. Conditional propagation

In recursive filtering schemes, the purpose of the propagation step 102 is to obtain a state enclosure that is valid at the time - or in our case close to - the time when observation about the system's state are made.

In the present method, there are two situations where a propagation does not need to be performed, reducing filter run time.

The first situation occurs when performing updates 104 over a sequence of synchronous vector observations. In this case, the *a posteriori* C-zonotope resulting from the update 104 with the first vector element can be re-used as *a priori* C-zonotope for the following sequential updates with the remaining elements of the observation vector.

Besides, when observations arrive close in time, instead of performing a propagation, it can be acceptable (in terms of added conservatism), to inflate the observation interval (see section 3.3.1) more, to extend the observation's time of validity over that of the preceding *a posteriori* C-zonotope. To accommodate this condition, a threshold $\overline{\Delta t} \geq 0$ is used by the filter. Before each propagation, the filter determines whether a propagation needs to be performed.

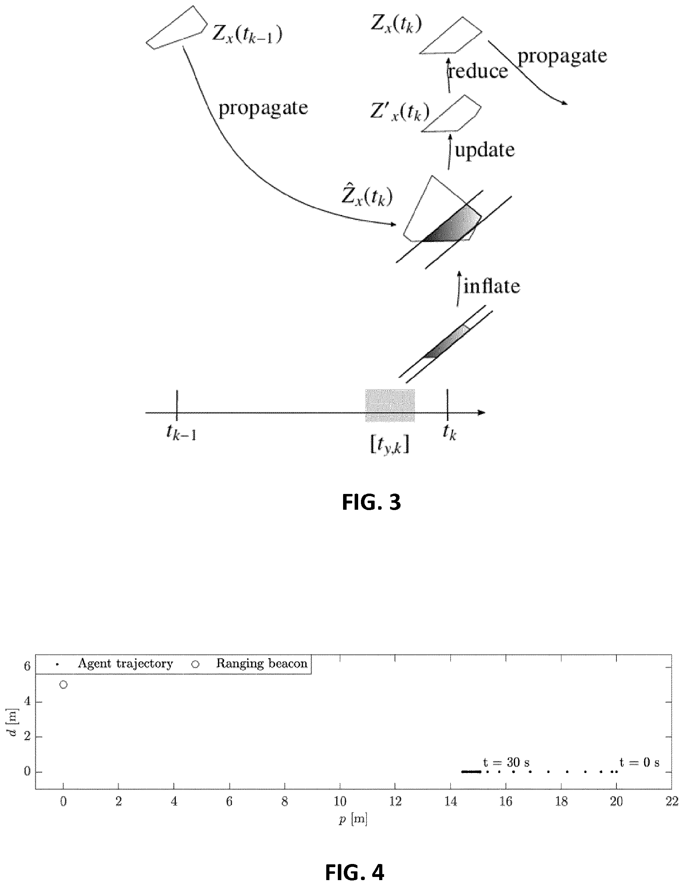

Algorithm 1 below illustrates how a conditional propagation can be implemented in practice: (see also **figure 3**):

---

## Algorithm 1: conditionalPropagation

---

**Input** : $\overline{\Delta t}, [t_{y,k}], t_{k-1}$

**Output:** $performPropagation$

1 ▷ Test for closeness

2 **if** $\sup(t_{k-1} - [t_{y,k}]) \leq \overline{\Delta t})$ **then**

3     $performPropagation = false$

4 **else**

5     $performPropagation = true$

6 ▷ Test for observation synchronicity

7 **if** $[t_{y,k}] == [t_{y,k-1}])$ **then**

8     $performPropagation = false$

---

### 3.3. Update

To perform the update, the nonlinear observation equation is linearized to form a linear inclusion of it. By evaluating the remainder (i.e. the linearization error) by Interval Arithmetic (IA), it is guaranteed to be valid over the *a priori* state enclosure. Each element of the observation vector then defines a strip in state space. The a priori C-zonotope can either be intersected with all these strips at once or sequentially. Popular set formalisms such as ellipsoids and zonotopes are not closed under intersection with a strip, and as such require an outer approximation of each intersection result, which renders the sequential intersection suboptimal. On the other hand, with sequential updates, re-linearization of the observation equation after each intersection can lead to significantly tighter updates due to tightened linearization error intervals. The result of these two opposing effects depends on the degree of nonlinearity of the observations involved and as such is application-dependent.

As an unique feature of C-zonotopes, they are closed under intersection with a strip. In consequence, updating with the whole observation vector at once or sequentially with each scalar element are equivalent operations. As a consequence, using C-zonotopes we can benefit from both effects: the simplicity of sequential updates without loss of intersection optimality and the tightening effect of re-linearization.

Without loss of generality, scalar observations are therefore considered in the following. Vectors of synchronous observations are converted into a sequence of scalar observations with identical timestamps before running the filter recursion. Thus, in the following, the simpler scalar observation equation is taken as an example:

$$\begin{pmatrix} y(t_{y,k}) \\ \hat{t}_y(t_{y,k}) \end{pmatrix} = \begin{pmatrix} h(x(t_{y,k}),u(t_{y,k}),t) + w(t_{y,k}) \\ t_{y,k} + w_t(t_{y,k}) \end{pmatrix} \tag{19}$$

Where $t_{y,k}$ is the true observation time of observation k and $\hat{t}_{t,k}$ is the apparent observation time subject to timing error.

Assuming interval-valued errors, a first-order approximation of the nonlinear observation map valid at time $t_{y,k}$ has the form

$$y(t_k) \quad = h(\hat{x}(t_{x,k}), \hat{u}(t_{x,k}), t_{x,k})$$

$$+ H(t_k)(x(t_k) - \hat{x}(t_{k-1})) + D(t_k)(u(t_k) - \hat{u}(t_k))$$

$$+ w(t_k) + \varepsilon_h f(t_k) \tag{20}$$

$$= H(t_k)x(t_k) + D(t_k)u(t_k) + \varepsilon_h f(t_k) + c_h(t_k) \tag{21}$$

With

$$H(t_k) = \frac{\partial h}{\partial x}\Big|_{\cdot x = \hat{x}(t_k)} \ , \ D(t_k) = \frac{\partial h}{\partial u}\Big|_{\cdot u = \hat{u}(t_k)} \tag{22}$$

$$\hat{x}(t_k) = \mathrm{mid}([Z_x(t_k)]) \tag{23}$$

$$\hat{u}(t_k) = \mathrm{mid}([\hat{Z}_u(t_k)]) \tag{24}$$

$$c_h(t_k) = h(\hat{x}(t_{x,k}), \hat{u}(t_{x,k}), t_{x,k}) - H(t_k)\hat{x}(t_{k-1}) - D(t_k)\hat{u}(t_k) + w(t_k) \tag{25}$$

where $\varepsilon_h(t_k) = \varepsilon_{h,x}(t_k) + \varepsilon_{h,u}(t_k) \in [\varepsilon_h(t_k)]$ is the linearization error over the a priori states $\hat{Z}_x$ and inputs $Z_u$. Note that $t_k$ is the time of validity of the *a priori* C-zonotope. The corresponding linear inclusion is then given by

$$y(t_k) \in H(t_k)Z_x(t_k) + B(t_{k-1})Z_u(t_k) + Z_q(t_k) + Z([\varepsilon_h(t_k)]) + Z([c_h(t_k)] \tag{26}$$

In fact, a linear observation equation and a set that contains the error of this linear equation for all states that are in the a priori C-zonotope are computed here. This error has multiple components:

- $D(t_k)Z_u(t_k)$: The impact of system inputs, e.g. control inputs generated by an autopilot or external perturbations. The C-zonotope $Z_u$ contains all possible inputs or perturbations.
- $Z[\varepsilon_h(t_k)]$: The linearization error interval converted into a C-zonotope. This zonotope contains all observations errors at different elements of the a priori zonotope. An observation linearization error at a given element of the a priori zonotope is a difference between an output resulting from applying the nonlinear observation model to the given element and an output resulting from applying the linear observation model to the given element.
- $Z([c_h(t_k)])$: a C-zonotope that represents all the constant terms of the linearized observation equation and the measurement noise interval of the original, nonlinear observation equation.

To perform the update two sets are intersected. The first one is given by the a priori C-zonotope (equation 18). The second one (see equation 35) is defined by the observation. Since we know that the observation $z(t_{y,k})$ is contained in the right side of equation 26, we can replace $y(t_{y,k})$ by $z(t_{y,k})$ in equation 26 to form equation 35. For a scalar observation, equation 35 then represents a strip in state space, see figure 3. Obviously, the second set is not a C-zonotope, since it is not closed (the strip runs infinitely). However, its intersection with the *a priori* C-zonotope is a C-zonotope (the *a posteriori* C-zonotope).

Note that while the linearized system equations are an approximation, the corresponding linear inclusions are guaranteed to contain the corresponding nonlinear solutions.

### 3.3.1. Observation interval inflation

Recall that the true observation time is known with bounded uncertainty, i.e. is known to fall within an interval $[t_{y,k}]$. In other words, the observation is valid somewhere within this time interval. Since the times of validity of the observations and the *a priori* C-zonotope are not guaranteed to coincide, the update may not be performed.

As a simple approach to remedy this situation, the observation error interval $[\varepsilon_{t_k}]$ is inflated, extending an observation's time of validity. Starting from the linear inclusion equation 26, the time between the time of validity of the *a priori* C-zonotope and the observation is bounded by the interval

$$[\Delta t_k] = t_k - [t_{y,k}] \qquad (27)$$

With a state increment interval

$$[\Delta x(t_k)] \qquad (28)$$

that satisfies

$$x(t) \in \hat{Z}_x(t_k) + Z[\Delta x(t_k)] \qquad (29)$$

if

$$t \in t_k + [t_{y,k}] \qquad (30)$$

we can compute an extended linear inclusion

$$y(t_{y,k}) \in H(t_k)Z_x(t_k) + D(t_k)Z_u(t_k) + Z_q(t_k) + Z([\varepsilon_h(t_k)])$$
$$+ Z([c_h(t_k)] + Z(H(t_k)[\Delta x]) \qquad (31)$$

The main objective of the inflation step is to solve the following problem: the time of validity of the observations is not guaranteed to coincide with the time of validity of the a priori C-zonotope. The basic idea to solve it is to inflate the observation error interval to ensure that its time of validity includes the time of validity of the *a priori* C-zonotope. This is obtained by computing an upper bound of the state variation (equation 28) between the observation time and the time of validity (equation 27) of $\hat{Z}_x(t_k)$. Then all known terms are grouped together into one inflated observation error interval leading to equation 32, which can be used by the filter in the update step 104 (equation 36).
All known terms are lumped together into one inflated observation error interval, simplifying to

$$y(t_{y,k}) \in H(t_k)Z_x(t_k) + Z([\varepsilon']) \qquad (32)$$

where $([\varepsilon']) = D(t_k)[Z_u(t_k)] + [\varepsilon_h(t_k)] + [c_h(t_k)] + H(t_k)[\Delta x])$
Note that the linearization error $\varepsilon_h(t_k)$ now needs to be computed over the inflated *a priori* state set $\hat{Z}_x(t_k) + Z[\Delta x(t_k)]$. For implementation, $\varepsilon_h(t_k)$ can be evaluated over the interval enclosure $[\hat{Z}_x] + [\Delta x]$ to be able to use interval arithmetic. This is generally faster than choosing the alternative interval $\hat{Z}_x + Z[\Delta x]$ due to the increase in C-zonotope complexity involved in the C-zonotope sum operation.
With the scalar observation $z(t_{y,k})$ we then have

$$z(t_{y,k}) \in H(t_k)Z_x(t_k) + Z([\varepsilon']) \qquad (33)$$

and

$$H(t_k)Z_x(t_k) \in z(t_{y,k}) - Z([\varepsilon']) \qquad (34)$$

$$\in Z([\varepsilon]) \qquad (35)$$

with $[\varepsilon] = z - [\varepsilon']$ and where $Z([\varepsilon]) = \{rad([\varepsilon]), mid([\varepsilon]), 0, 0\}$ is the G-rep. of the interval $[\varepsilon]$.

$$Z'_x(t_k) = \hat{Z}_x(t_k) \cap_H Z([\varepsilon]) \tag{36}$$

$$= \{G'_x(t_k), c'_x(t_k), A'_x(t_k), b'_x(t_k)\} \tag{37}$$

With

$$G'_x(t_k) = [\hat{G}_x(t_k) \quad 0] \tag{38}$$

$$c'_x(t_k) = \hat{c}_x(t_k) \tag{39}$$

$$A'_x(t_k) = \begin{bmatrix} \hat{A}_x(t_k) & 0 \\ H(tk)\hat{G}_x & -rad([\varepsilon]) \end{bmatrix} \tag{40}$$

$$b'_x(t_k) = \begin{bmatrix} \hat{b}(t_k) \\ id([\varepsilon]) - H(t_k)\hat{c}(t_k) \end{bmatrix} \tag{41}$$

See figure 3 for an overview of the propagation and update timing.

### 3.4. Reduction

As can be seen from equations 36-41, each update increases the complexity - i.e. the number of generators $n_g$ and the number of constraints $n_c$ - of the state C-zonotope. To control computational complexity and memory footprint, the filter performs a reduction after the update if the complexity of $\hat{Z}_x(t_k)$ exceeds a certain chosen complexity threshold defined by $\bar{n}_g, \bar{n}_c$.

Algorithm 2 below illustrates how the reduction step 106 can be implemented in practice:

---

**Algorithm 2:** reduce

---

**Input**  $: Z'_x(t_k), \bar{n}_g, \bar{n}_c$

**Output:** $Z_x(t_k)$

1 **if** $n_g(Z'_x(t_k)) > \bar{n}_g$ *or* $n_c(Z'_x(t_k)) > \bar{n}_c$ **then**

2 $\quad$ Reduce $Z'_x(t_k)$ to $Z_x(t_k)$ by reduction algorithms given in [19, 25]

3 **else**

4 $\quad$ $Z_x(t_k) = Z'_x(t_k)$

---

Algorithms 3, 4 below illustrate the different steps performed by the filter according to an embodiment.

---

**Algorithm 3:** This loop runs until the filter stops executing

---

1  Compute $\hat{Z}_x(t_1)$ with VSIVIA or from *a priori* knowledge

2  $k = 1$

3  **Loop**

4     Wait for incoming observation $\mathbf{z} \in \mathbb{R}^m$

5     Select propagation time $t_k$

6     **for** $i \leftarrow 1$ **to** $m$ **do**

7        **if** $k == 1$ **then**

8           $Z = \hat{Z}_x(t_1)$

9        **else**

10          $Z = Z_x(t_{k-1})$

11       $Z_x(t_k) = \text{czesmf\_recursion}(Z, z_i)$

12       $k += 1$

---

---

**Algorithm 4:** czesmf_recursion

---

**Input** : $Z_x(t_{k-1})$, $z(t_{y,k})$

**Output:** $Z_x(t_k)$

1 **if** $conditionalPropagation(\overline{\Delta t}, [t_{y,k}], t_{k-1})$ **then**

2 | Compute linear inclusion eq. 26

3 | Compute *a priori* $\hat{Z}_x(t_k)$ with eq. 18

4 **else**

5 | $\hat{Z}_x(t_k) = Z_x(t_{k-1})$

6 Compute linear inclusion eq. 26

7 Compute inflated observation error interval with eq. 31

8 Compute *a posteriori* $Z'_x(t_k)$ with eq. 36

9 Reduce: $Z_x(t_k) = reduce(Z'_x(t_k), \bar{n}_g, \bar{n}_c)$

---

## 4. 1D application

In this first example, we consider a target device (or agent) whose motion is confined to the x axis of a Cartesian frame, see **figure 4**. We estimate its position p and velocity v based only on range observations to a beacon. The beacon being positioned off the x axis by the distance d renders the observation equation nonlinear and as such requires a nonlinear estimator such as the CZESMF. There is no uncertainty in observation times in this minimal example.

The dynamics of the state $x = (p\ v)^T$ are governed by

$$\mathbf{x}(t_k) = \begin{bmatrix} 1 & T_s \\ 0 & 1 \end{bmatrix} \mathbf{x}(t_{k-1}) + \begin{pmatrix} \int_{t_{k-1}}^{t_k} \int_{t_{k-1}}^{t_k} a(t)dt\,dt \\ \int_{t_{k-1}}^{t_k} a(t)dt \end{pmatrix} \quad (42)$$

wherein $T_s = t_k - t_{k-1}$ and $a(t)$ is the acceleration.

Range observations are governed by

$$r(t_{y,k}) = \sqrt{d^2 + p^2(t_{y,k})} + w_k \quad (43)$$

with $w_k \in [w] = [-0.224, 0.168]\ m$.

### 4.1. Initialization

We assume that initially the target's position and velocity are confined to

$$\hat{Z}_x(t_1) = Z \begin{pmatrix} [0, 1000]\ m \\ [-0.7, 0.7]\ \frac{m}{s} \end{pmatrix} \quad (44)$$

### 4.2. Propagation

With target accelerations being bounded by $a(t) \in [a] = [-0.4, 0.4]\frac{m}{s^2}$ and $T_s = t_k - t_{k-1}$ an inclusion for $x(t_k)$ is given by

$$\mathbf{x}(t_k) \in \begin{bmatrix} 1 & T_s \\ 0 & 1 \end{bmatrix} Z_x(t_{k-1}) + \begin{bmatrix} \frac{1}{2}T_s^2 \\ T_s \end{bmatrix} Z([a]) \qquad (45)$$

$$\in \mathbf{F}(t_{k-1})Z_x(t_{k-1}) + Z_q(t_{k-1}) \qquad (46)$$

with $Z_q(t_{k-1}) = QZ([a])$.

Since the inclusion equation 46 is already linear, we obtain the *a priori* C-zonotope directly as

$$\hat{Z}_x(t_k) = FZ_x(t_{k-1}) + Z_q(t_{k-1}) \qquad (47)$$

### 4.3. Update

Since observations times are without uncertainty in this example, $t_k = t_{y,k}$, i.e. we propagate the state enclosure to the observations' time of validity. From equation 43 is formed the linear inclusion

$$r(t_k) \in \mathbf{H}(t_k)Z_x(t_k) + Z([w]) + Z([\epsilon_h]) + c_h(t_k) \qquad (48)$$

with

$$\mathbf{H}(t_k) = \frac{\partial r}{\partial x} \qquad (49)$$

$$= \begin{bmatrix} \frac{\hat{p}_k}{\sqrt{d^2 + \hat{p}_k^2}} & 0 \end{bmatrix} \qquad (50)$$

$$= \begin{bmatrix} H_p & H_v \end{bmatrix} \qquad (51)$$

and

$$c_h(t_k) = \sqrt{d^2 + \hat{p}_k^2} - \mathbf{H}(t_k)\hat{\mathbf{x}}(t_k) \qquad (52)$$

When computing an enclosure of the linearization error, the generic approach of evaluating the Lagrange remainder by interval arithmetic often leads to overly conservative enclosures due to dependencies. Evaluating $\varepsilon_h$ explicitly can provide tighter enclosures, even more so when exploiting monotonicity. An explicit expression of the linearization error is

$$\epsilon_h = \sqrt{d^2 + p^2} - H_p p - c_h(t_k) \qquad (53)$$

To check for monotonicity, consider the derivative

$$\frac{\partial \epsilon_h(p)}{\partial p} = \frac{p}{\sqrt{d^2 + p^2}} - H_p \qquad (54)$$

To compute a tight inclusion of $\epsilon_h$ over the interval enclosure of the *a priori* C-zonotope $Z_x(t_k)$, we then only need to evaluate its vertices as well as the possible inflection point given by

$$\frac{\partial \epsilon_h(\bar{p})}{\partial p} = 0 \qquad (55)$$

$$\bar{p} = \sqrt{\frac{H_p d^2}{1 - H_p^2}} \qquad (56)$$

The update is then performed according to equation 36.

### *4.4. Simulations*

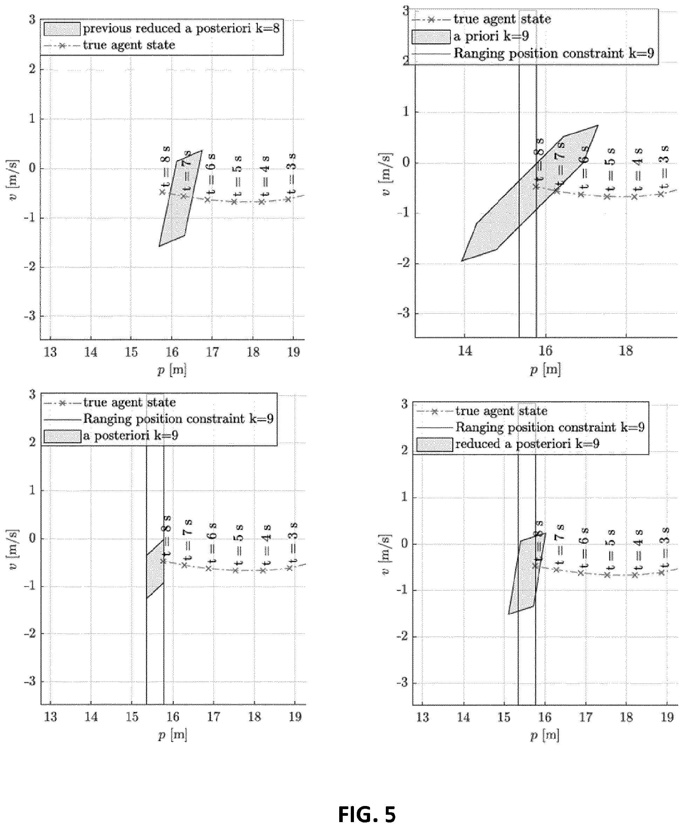

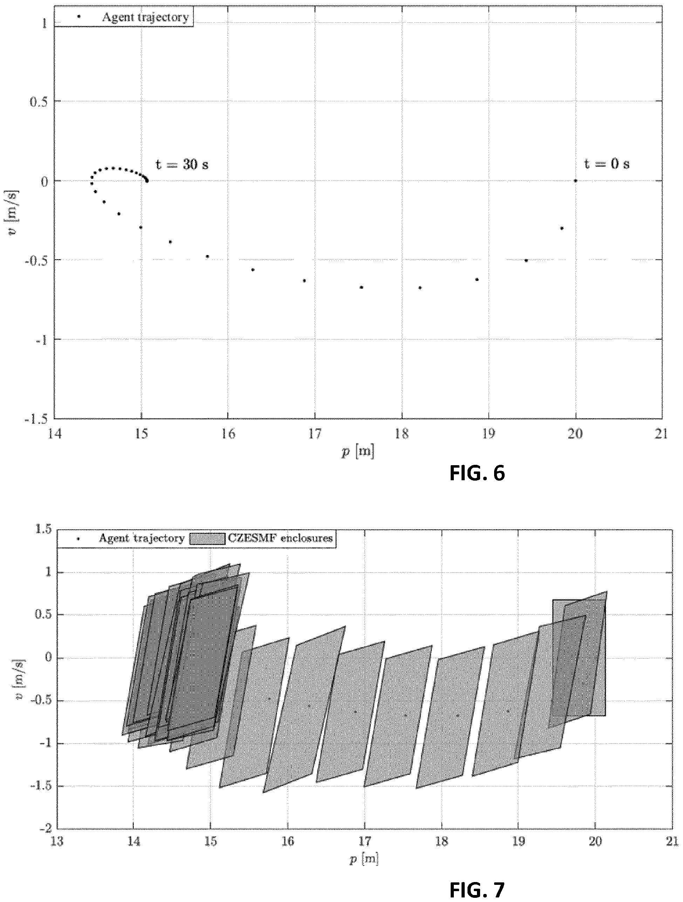

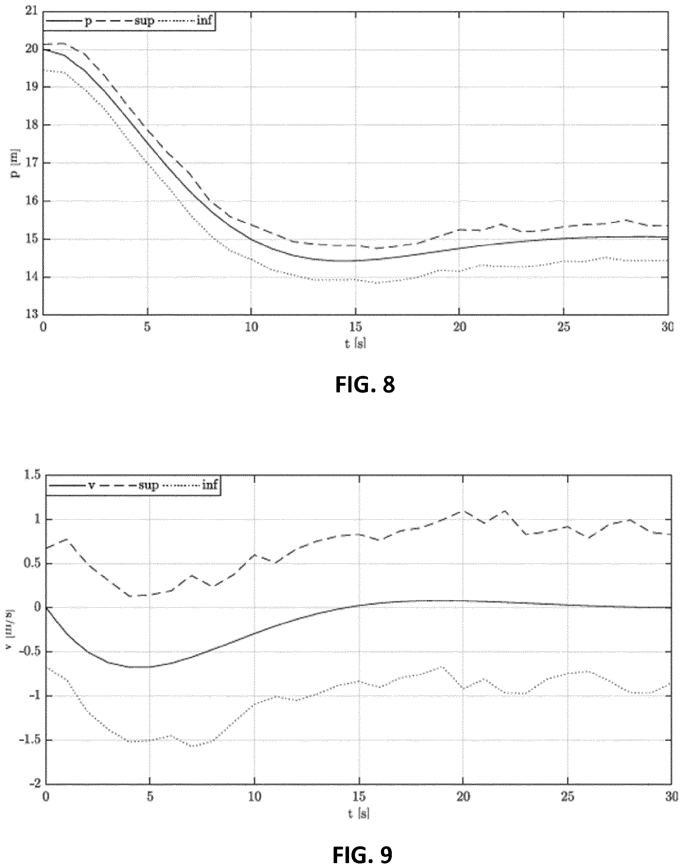

Snapshots of the propagation step 102, update step 104 and reduction step 106 are displayed in **figure 5.** **Figures 6 and 7** show the true state trajectory and the CZESMF enclosures, respectively. **Figures 8 and 9** show the corresponding position and velocity interval enclosures, respectively. After each update, state C-zonotopes have been reduced to $\bar{n}_g = 6$, $\bar{n}_g = 2$.

### 5. 2D localization application

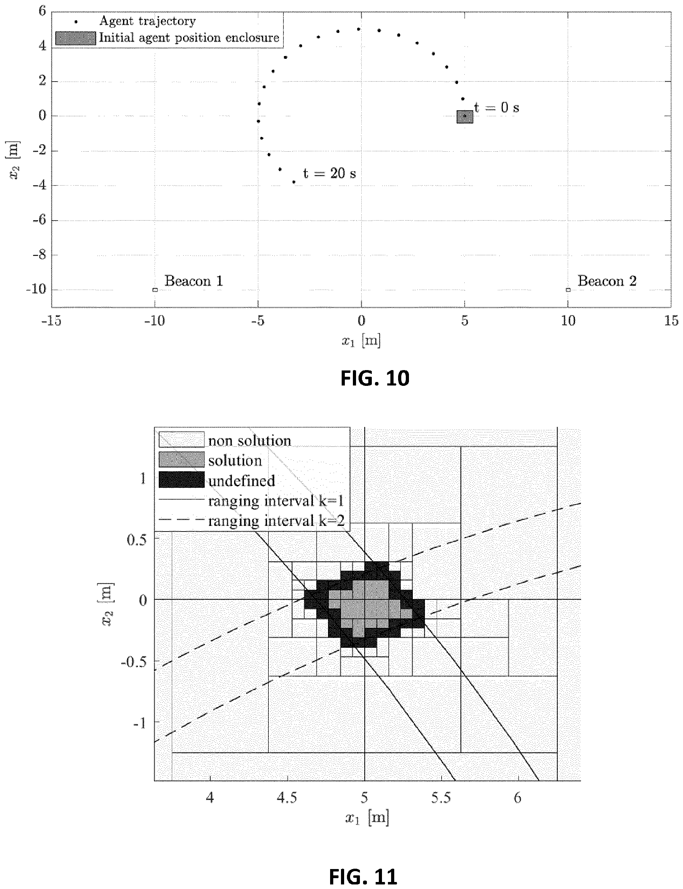

In this example we consider a target device moving on a field with two static ranging beacons (see **figure 10**). This could be an automatic lawnmower required to avoid cutting down flowers within specified zones and to avoid leaving the perimeter of the field or an automatic lift truck in a modern warehouse.

The target's position $x = (x_1\ x_2)^T$ is governed by

$$\mathbf{x}(t_k) = \mathbf{x}(t_{k-1}) + \mathbf{q}(t_{k-1}) \qquad (57)$$

where

$$\|\mathbf{q}(t_k)\| \leq \bar{v}(t_{k+1} - t_k) \qquad (58)$$

with the target's maximum velocity $\bar{v}$. This velocity norm constraint is a conservative but easily obtainable dynamic model for a mobile target device if better knowledge of its inner dynamics is not available.

The target device regularly receives ranging observations to both beacons situated at the uncertain positions

$$\mathbf{p}_{b1} \in \begin{pmatrix} -10.0\,\mathrm{m} \\ -10.0\,\mathrm{m} \end{pmatrix} + \epsilon_b \qquad (59)$$

$$\mathbf{p}_{b2} \in \begin{pmatrix} 10.0\,\mathrm{m} \\ -10.0\,\mathrm{m} \end{pmatrix} + \epsilon_b \qquad (60)$$

with

$$\epsilon_b \in \begin{pmatrix} [-0.1, 0.1]\,\mathrm{m} \\ [-0.1, 0.1]\,\mathrm{m} \end{pmatrix} \tag{61}$$

The ranging observation to each beacon $i_k$ is governed by

$$\begin{pmatrix} r_k \\ t_{y,k} \end{pmatrix} = \begin{pmatrix} \|\mathbf{x}(t) - \mathbf{p}_{bi_k}\| \\ t + w_t(t) \end{pmatrix} \tag{62}$$

These two observations are nominally synchronous at a frequency of 1 Hz. Imperfect synchronization of the ranging sensor with wall clock time causes the bounded timing jitter $w_t(t) \in [-10^{-2}\ 10^{-2}]\ s$. That is to say, a pair of ranging observations arrives approximately every second, but not exactly.

To obtain periodic state enclosures, the filter recursion is triggered at the upper bound of the observation time intervals, i.e. $(t_1, t_2, t_3, t_4,...) = (0.01\ s,\ 0.01\ s,\ 1.01\ s,\ 1.01\ s,...)$.

### 5.1. Initialization

The target device is initially inside the field. This allows the computation of a C-zonotope that corresponds to an interval covering the field. This extremely conservative initial enclosure leads however to extremely conservative filter solutions. A tighter enclosure of the initial state is therefore computed with VSIVIA. This one-time step is not very computationally expensive in two dimensions (0.8 s and 233 processed boxes with $\varepsilon = 0.1\ m$). For estimation problems in higher state dimensions, it might be preferable to couple VSIVIA with constraint propagation to compute a sufficiently tight initial state enclosure in an acceptable time.

The C-zonotope corresponding to the interval enclosure of the subpaving (denoted as "solution" and "undefined" in **figure 11**) obtained by VSIVIA is used to initialize the filter.

### 5.2. Propagation

The state dynamics are already linear in the state. The propagation can thus be directly performed by

$$\hat{Z}_x(t_k) = Z_x(t_{k-1}) + Z_s(t_{k-1}) \tag{63}$$

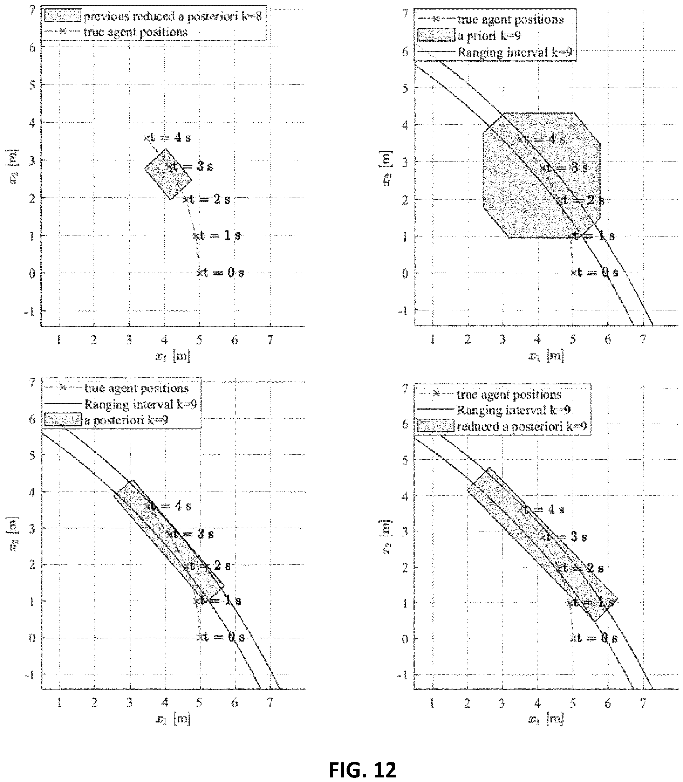

The state dynamics uncertainty ball defined by equation 58 is outer approximated by a C-zonotope (see Appendix A below) to obtain $Z_s(t_{k-1})$. An example of the resulting a priori C-zonotope is displayed in figure 12. Note how $\hat{Z}_x(t_9)$ contains the true position at $t_9$. Note also that $t_9$ corresponds to the first propagation-update sequence performed close to $t = 4\ s$, since two ranging observations arrive at approximately 1 Hz and every observation increases the filter recursion index k.

### 5.3. Update

It simplifies things to perform each update in the nominal frame of the corresponding ranging beacon $i_k$. The a priori C-zonotope in the beacon frame being given by

$$\hat{Z}_x^b(t_k) = \hat{Z}_x(t_k) - \mathbf{p}_{bi_k} \tag{64}$$

each ranging observation is then governed by

$$r(t_k) = \|\mathbf{x}(t_k) - \epsilon_b\| + w_{r,k} \tag{65}$$

To simplify further, we absorb the small beacon uncertainty into the observation error $w_{r,k}$ by virtue of

$$\|\mathbf{x}\| - \|\epsilon_b\| \geq \|\mathbf{x} - \epsilon_b\| \leq \|\mathbf{x}\| + \|\epsilon_b\| \qquad (66)$$

leading to

$$r(t_k) = \|\mathbf{x}(t_k)\| + w'_{r,k} \qquad (67)$$

with $w'_{r,k} \in \left[w'_{r,n}\right] = [w_r] + [-rad([\epsilon_b]), rad([\epsilon_b])]$ .

From equation 67 we form the linear inclusion

$$r(t_k) \in \mathbf{H}(t_k)Z_x(t_k) + Z([w'_r]) + Z([\epsilon_h]) + c_h(t_k) \qquad (68)$$

with

$$\mathbf{H}(t_k) = \frac{\hat{\mathbf{x}}^T(t_k)}{\|\hat{\mathbf{x}}^T(t_k)\|} \qquad (69)$$

and

$$c_h(t_k) = \|\mathbf{x}_k\| - \mathbf{H}(t_k)\hat{\mathbf{x}}(t_k) \qquad (70)$$

*5.3.1. Observation interval inflation*

Before compensating for timing jitter, the state increment interval $[\Delta x(t_k)]$ is obtained from the velocity norm bound $\bar{v}$

$$[\Delta x] = 2\bar{v}rad([w_t])\begin{bmatrix}[-1,1]\\[-1,1]\end{bmatrix} \qquad (71)$$

and the inflated observation inclusion is computed as follows

$$r(t_{y,k}) \in \mathbf{H}(t_k)Z_x^b(t_k) + Z([w'_r]) + Z([\epsilon_h]) + c_h(t_k) + \mathbf{H}(t_k)Z([\Delta\mathbf{x}]) \qquad (72)$$

After computing the *a posteriori* C-zonotope $Z_x^b(t_k)$ in the beacon frame with eqs. 36-41, the *a posteriori* C-zonotope is translated back to the navigation frame

$$Z_x(t_k) = Z_x^b(t_k) + \mathbf{p}_{bi_k} \qquad (73)$$

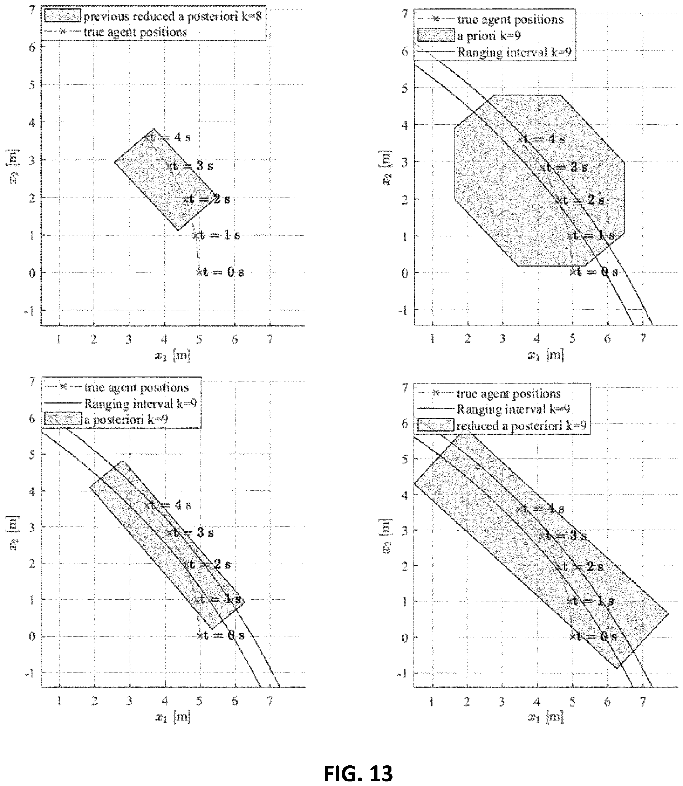

**Figure 12** shows the obtained a posteriori C-zonotope at $t_9$, as well as the reduced a posteriori C-zonotope. Figure 13 shows the obtained results with increased timing noise value. Note the larger a posteriori C-zonotope due to increased observation interval inflation.

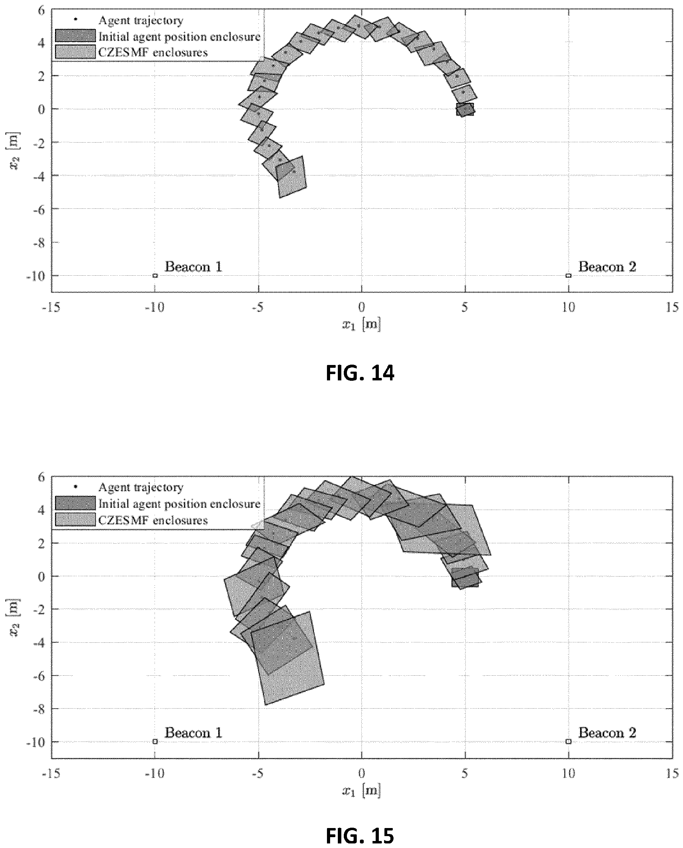

The full state enclosure trajectory is displayed in **figure 14,** and in **figure 15** for increased observation timing noise. After each update, state C-zonotopes have been reduced to $\bar{n}_g$ = 15, $\bar{n}_c$ = 1. By setting $\Delta t$ to 0.1 s, it is ensured that a propagation is only performed once for every pair of ranging observations, thus reducing filter run time (conditional propagation).

## 6. Application to 3D peer-to-peer localization

In this example, the state of interest is the relative position between two agents, such as unmanned aircraft in close formation flight. Numerous aerospace applications require guaranteed relative positioning, such as aerial refueling, energy efficient formation flight and nanosatellite swarms. In this example, raw GNSS code and carrier phase observations as well as UWB peer-to-peer ranging observations are obtained. Both kinds of sensors are inexpensive, of very low mass - tens of grams - and readily available as Commercial-Off-The-Shelf (COTS) components. We show how the CZESMF can be applied to this localization problem of high practical relevance and evaluate its conservatism in a realistic simulation benchmark in comparison to existing set-membership state estimation schemes.

In the following time indices are dropped wherever unambiguously possible to improve readability.

### 6.1. Initialization

Due to the high degree of linearity of the GNSS code phase double difference observations, the filter can simply be initialized with a very conservative guess about the initial relative position.

### 6.2. Propagation

We propagate the guaranteed relative position x set between two vehicles A and B

$$x = p_B - p_A$$

Set-valued dynamic vehicle models of moderate conservatism are rarely available, mostly due to the absence of established set-theoretic system identification methods. A vehicle-agnostic propagation model is therefore highly desirable. Set-membership inertial navigation is one option worthy of further research, but not further explored here. We instead rely on time-differenced GNSS carrier-phase double difference observations, when available, and a rough velocity norm constraint model at times without GNSS observations. Standalone time-differenced carrier phase observations have received originally introduced for precise flight trajectory reconstruction. Building thereon, Time-Differenced Double phase Difference (T3D) observations have first been proposed recently for tight set-valued relative trajectory tracking. The millimeter-level carrier noise allows to compute very narrow enclosures of position increments between GNSS observations. Applied to relative position estimation, propagated state sets are less conservative, leading to smaller linearization error sets in the update step and finally to less conservative a posteriori state sets.

### 6.2.1. T3D observations

Forming single differences of carrier phase observations removes the majority of atmospheric errors and the satellite clock error.

Single difference carrier phase observations for two receivers A and B and a satellite S are then given by

$$\Delta\Phi(\mathbf{p}_A, \mathbf{p}_B, \mathbf{p}_S) = \|\mathbf{p}_A - \mathbf{p}_S\| - \|\mathbf{p}_B - \mathbf{p}_S\| + \Delta N\lambda + \epsilon_{\Delta\Phi} + \Delta Tc \quad (75)$$

where $\varepsilon_{\Delta\Phi}$ captures residual errors due to hardware noise and multipath, $\Delta T$ is the differential receiver clock error, c the speed of light, $\lambda$ is the carrier wavelength and $\Delta N$ the differential carrier cycle ambiguity.

Using $d_S = p_A - p_S$ and $p_B = p_A + x$ we write more compactly

$$\Delta\Phi(\mathbf{x}, \mathbf{d}_S) = \|\mathbf{d}_S\| - \|\mathbf{d}_S + \mathbf{x}\| + \Delta N\lambda + \epsilon_{\Delta\Phi} + \Delta Tc \qquad (76)$$

The differential receiver clock error is removed by forming double differences with respect to a reference satellite R

$$\nabla\Phi(\mathbf{x}, \mathbf{d}_S, \mathbf{d}_R) = \|\mathbf{d}_S\| - \|\mathbf{d}_S + \mathbf{x}\| - \|\mathbf{d}_R\| + \|\mathbf{d}_R + \mathbf{x}\| + \epsilon_{\nabla\Phi} + \nabla N\lambda \quad (77)$$

Double difference carrier phase observations are thus a nonlinear function of the relative position of receivers A and B and the vectors between absolute receiver positions and satellite orbit positions.

Assuming that the receiver maintains phase lock over two subsequent epochs, the ambiguities are a constant that is eliminated by forming the difference of two subsequent double difference observations, forming the T3D observation

$$\Delta\nabla\Phi(t_k) = \nabla\Phi(t_k) - \nabla\Phi(t_{k-1}) \qquad (78)$$

In the following we show how we can compute a C-zonotope that encloses the position increment $\Delta x = x(t_k) - x(t_{k-1})$.

Linearizing (using equation 78) directly and computing an interval enclosure of the Laplace remainder using interval arithmetic as proposed in "A nonlinear set-membership filter for online applications", by E. Scholte et al. yields very large over-approximation due to heavy dependencies.

This issue is overcome by instead linearizing the single difference equation 76.

The Lagrange remainder is then evaluated using IA and the resulting interval is added to the hardware error interval $\varepsilon_{\Delta\Phi}$.

To simplify the computation of the necessary Jacobian and Hessian it is convenient to write equation 76 as

$$\Delta\Phi = \sum_{i=1}^{2} s_i \|\mathbf{E}_i \tilde{\mathbf{z}}\| + \Delta N\lambda + \epsilon_{\Delta\Phi} + \Delta Tc \qquad (79)$$

$$= \sum_{i=1}^{2} s_i (\tilde{\mathbf{z}}^T \mathbf{E}_i^T \mathbf{E}_i \tilde{\mathbf{z}})^{1/2} + \Delta N\lambda + \epsilon_{\Delta\Phi} + \Delta Tc \qquad (80)$$

$$= \sum_{i=1}^{2} s_i (\tilde{\mathbf{z}}^T \mathbf{M}_i \tilde{\mathbf{z}})^{1/2} + \Delta N\lambda + \epsilon_{\Delta\Phi} + \Delta Tc \qquad (81)$$

with the augmented state vector

$$\mathbf{z} = (\mathbf{d}_S^T \ \mathbf{x}^T)^T \qquad (82)$$

and

$$\mathbf{E}_1 = \begin{bmatrix} \mathbf{I}_3 \ \mathbf{0}_3 \end{bmatrix}, \mathbf{E}_2 = \begin{bmatrix} \mathbf{I}_3 \ \mathbf{I}_3 \end{bmatrix}, \mathbf{s} = \begin{bmatrix} 1 & -1 \end{bmatrix} \qquad (83)$$

The Jacobian and Hessian of equation 81 can then conveniently be formed as

$$\frac{\partial\Delta\Phi}{\partial\mathbf{z}} = \sum_{i=1}^{2} (\mathbf{z}^T \mathbf{M}_i \mathbf{z})^{-1/2} \mathbf{z}^T \mathbf{M}_i \qquad (84)$$

$$= \begin{bmatrix} \frac{\partial\Delta\Phi}{\partial\mathbf{d}_S} & \frac{\partial\Delta\Phi}{\partial\mathbf{x}} \end{bmatrix} \qquad (85)$$

$$\frac{\partial^2\Delta\Phi}{\partial\mathbf{z}^2} = \sum_{i=1}^{2} (\mathbf{z}^T \mathbf{M}_i \mathbf{z})^{-1/2} \mathbf{M}_i^T - \mathbf{M}_i^T \mathbf{z}(\mathbf{z}^T \mathbf{M}_i \mathbf{z})^{-3/2} \mathbf{z}^T \mathbf{M}_i \qquad (86)$$

Interval bounds on the observation model error due to linearization and parametric uncertainty (uncertain orbit position of the satellite) can thus be obtained by evaluating

$$[R_{\Delta\Phi}] = \frac{\partial \Delta\Phi}{\partial \mathbf{d_S}}([\mathbf{d}_s] - \text{mid}([\mathbf{d}_s]))$$

$$+ ([\mathbf{z}] - \text{mid}([\mathbf{z}]))^T \frac{\partial^2 \Delta\Phi([\mathbf{z}])}{\partial \mathbf{z}^2} \qquad (87)$$

We proceed to forming the linear single difference observation

$$\Delta\Phi = \Delta\Phi(\text{mid}([\mathbf{d}_S]), \text{mid}([\mathbf{x}])) \qquad (88)$$

$$+ pdv\Delta\Phi\mathbf{x}(\mathbf{x} - \text{mid}([\mathbf{x}])) + R_{\Delta\Phi} + \epsilon_{\Delta\Phi} + \Delta N\lambda + \Delta Tc$$

$$(89)$$

As $[R_{\Delta\Phi}]$ is generally very narrow, of the order of millimeters, for small separations we can linearize about x = 0 and have the more compact form

$$\Delta\Phi = \mathbf{H}_S\mathbf{x} + \epsilon'_{\Delta\Phi} + \Delta N\lambda + \Delta Tc \qquad (90)$$

familiar from the RTK literature, with $\varepsilon'_{\Delta\Phi} = \varepsilon_{\Delta\Phi} + R_{\Delta\Phi} + pdv\Delta\Phi\mathbf{x}(\mathbf{x} - \text{mid}([\mathbf{x}]))$. We can then form a linear double difference observation model that is free of dependencies

$$\nabla\Phi = (\mathbf{H}_R - \mathbf{H}_S)\mathbf{x} + \epsilon'_{\nabla\Phi} \qquad (91)$$

$$= \mathbf{H}_\nabla\mathbf{x} + \epsilon'_{\nabla\Phi} \qquad (92)$$

where $\varepsilon'_{\nabla\Phi}$ now lumps together observation and linearization errors.

Taking the difference of two consecutive carrier phase observations with observation times $t_{k-1}$ and $t_k$ respectively, the constant ambiguity terms are eliminated. Introducing $\Delta x(t_k) = x(t_k) - x(t_{k-1})$, the T3D observation is given by

$$\Delta\nabla\Phi = \mathbf{H}_\nabla(t_k)\mathbf{x}(t_k) - \mathbf{H}_\nabla(t_{k-1})\mathbf{x}(t_{k-1}) + \epsilon_{\Delta\nabla\Phi}(t_k) \qquad (93)$$

$$= \mathbf{H}_\nabla(t_k)\mathbf{x}(t_k) - (\mathbf{H}_\nabla(t_k) + \Delta\mathbf{H}_\nabla(t_k))\mathbf{x}(t_{k-1}) + \epsilon_{\Delta\nabla\Phi}(t_k)$$

$$(94)$$

$$= \mathbf{H}_\nabla(t_k)\Delta\mathbf{x}(t_k) - \Delta\mathbf{H}_\nabla(t_k)\mathbf{x}(t_{k-1}) + \epsilon_{\Delta\nabla\Phi}(t_{k-1}) \qquad (95)$$

$$= \mathbf{H}_\nabla(t_k)\Delta\mathbf{x}(t_k) + \epsilon'_{\Delta\nabla\Phi}(t_k) \qquad (96)$$

with

$$\epsilon'_{\Delta\nabla\Phi}(t_k) \in [\epsilon'_{\Delta\nabla\Phi}(t_k)] \qquad (97)$$

$$[\epsilon'_{\Delta\nabla\Phi}(t_k)] = [\epsilon_{\nabla\Phi}(t_k)] - [\epsilon_{\nabla\Phi}(t_{k-1})] - [\Delta\mathbf{H}_\nabla(t_k)][\mathbf{x}(t_{k-1})] \quad (98)$$

We exploit here the fact that the geometry matrix $H_\nabla$ changes very little between two consecutive time steps due to the large distance between receiver and satellites, leading to a very narrow incremental term $\Delta H_\nabla(j)$. We obtain an observation that is linear in the incremental displacement between two time steps. We take advantage of this observation to compute very accurate enclosures of the incremental displacement as follows. Lumping together terms, we write equation 96 as the linear inclusion

$$\Delta \nabla \Phi \ \in \mathbf{H}_\nabla \Delta \mathbf{x} + [\epsilon] \qquad (99)$$

The T3D observation $\Delta \nabla \Phi$ constrains $\Delta x$ to a polytope P whose half-space representation is given by

$$\begin{pmatrix} -\mathbf{H}_\nabla \Delta \mathbf{x} \\ \mathbf{H}_\nabla \Delta \mathbf{x} \end{pmatrix} \leq \begin{pmatrix} \bar{\epsilon} \\ \underline{\epsilon} \end{pmatrix} - \begin{pmatrix} \Delta \nabla \Phi \\ -\Delta \nabla \Phi \end{pmatrix} \qquad (100)$$

$$\mathbf{P} \Delta \mathbf{x} \leq \mathbf{k} \qquad (101)$$

The corresponding C-zonotope $Z_{\Delta x}(t_k)$ is then given by Theorem 1 disclosed in "Constrained zonotopes: a new tool for set-based estimation and fault detection", by J.K. Scott et al. This is used in the filter propagation by setting $F(t_{k-1}) = I_3$, $B(t_{k-1}) = I_3$, $Z_{\Delta x}(t_k)$, $Z_q(t_{k-1}) = 0$.

### 6.2.2. Velocity-norm propagation

In this application example, inter-vehicle ranging observations are not synchronized with GNSS observations and arrive at a higher rate. To perform the necessary propagation before updating with a ranging observation, we use a crude model based on norm-bounded relative velocity. For a propagation horizon $t_k$ - $t_{k-1}$ the norm-bound $v_{max}$ defines a sphere with radius $r = v_{max}(t_k - t_{k-1})$. We outer-approximate this sphere by a symmetric C-zonotope, $Z^s$ of user-defined complexity. The propagation is then performed by setting

$$F(t_{k-1}) = I_3, \ B(t_{k-1}) = I_3, \ Z_u(t_{k-1}) = 0, \ Z_q(t_{k-1}) = Z^S.$$

### 6.3. Update

### 6.3.3. GNSS update

GNSS code phase single difference observations are governed by

$$\Delta \rho(\mathbf{p}_A, \mathbf{p}_J, \mathbf{p}_S) = \|\mathbf{p}_A - \mathbf{p}_S\| - \|\mathbf{p}_B - \mathbf{p}_S\| + \epsilon_{\Delta \rho} + \Delta T c \quad (102)$$

where $\varepsilon_{\Delta \rho}$ captures residual errors due to hardware noise and residual atmospheric errors, $\Delta T$ is the differential receiver clock error and c is the speed of light.

Using $d_S = p_A - p_S$ and $p_B = p_A + x$ we write more compactly

$$\Delta \rho(\mathbf{x}, \mathbf{d}_S) = \|\mathbf{d}_S\| - \|\mathbf{d}_S + \mathbf{x}\| + \epsilon_{\Delta \rho} + \Delta T c \qquad (103)$$

The differential receiver clock error is removed by forming double differences with respect to a reference satellite R

$$\nabla \rho(\mathbf{x}, \mathbf{d}_S, \mathbf{d}_R) = \|\mathbf{d}_S\| - \|\mathbf{d}_S + \mathbf{x}\| - \|\mathbf{d}_R\| + \|\mathbf{d}_R + \mathbf{x}\| + \epsilon_{\nabla \rho} \qquad (104)$$

Just like carrier phase double differences, double difference code phase observations are thus a nonlinear function of the relative position of A and B and the vectors between absolute vehicle positions and satellite orbit positions. We follow the same strategy as for carrier phase observations to form a linear inclusion for code phase double differences, leading to

$$\nabla \rho \ \in \mathbf{H}_\nabla Z_x + Z([\epsilon'_{\nabla \rho}]) \qquad (105)$$

allowing for an update of the state enclosure.

*6.3.2. Ranging update*

The inter-vehicle ranging observations are given by

$$r = \|\mathbf{x} + \mathbf{R}^A \mathbf{r}_A - \mathbf{R}^B \mathbf{r}_B\| + \hat{w}_{r,k} \qquad (106)$$

with the positions $r_A$, $r_B$ of the UWB ranging antenna centers with respect to the GNSS antenna centers in the respective body frame and the device hardware measurement noise $\hat{w}_r \in [\hat{w}_r]$. Equation 106 is subject to parametric uncertainties due to uncertainty in the attitudes $R^A, R^B$ of both UAS as well as uncertain antenna positions $r_A$, $r_B$.

In the following we assume that $r_A$, $r_B$ are small, i.e. the ranging antennas are close to the GNSS antennas, and that interval bounds of their additive effect on the range observation have been determined and lumped into a combined range error $w_r$:

$$r = \|\mathbf{x}\| + w_r \qquad (107)$$

To linearize equation 107, we first write range observations as

$$r = (\mathbf{x}^T \mathbf{x})^{1/2} + w_r \qquad (108)$$

The first order interval Taylor expansion of equation 108 follows in the same vein as for GNSS carrier phase observations

$$r = \|\hat{\mathbf{x}}\| + \frac{\partial r}{\partial \mathbf{x}}(\mathbf{x} - \hat{\mathbf{x}}) + \epsilon_r + w_r$$

with the Jacobian and Hessian

$$\frac{\partial r}{\partial \mathbf{x}} = (\mathbf{x}^T \mathbf{x})^{-1/2} \mathbf{x}^T \qquad (109)$$

$$\frac{\partial^2 r}{\partial \mathbf{x}^2} = (\mathbf{x}^T \mathbf{x})^{-1/2} \mathbf{I}_3 - \mathbf{x}(\mathbf{x}^T \mathbf{x})^{-3/2} \mathbf{x}^T \qquad (110)$$

Geometrically, this linearized range observation corresponds to the relative position vector projected on the gradient vector $\frac{\partial r}{\partial x}$, while the nonlinear slant range corresponds to a sphere. Although a good approximation at large distances, the increasing curvature of the sphere introduces larger linearization errors as vehicles get closer to one another, rendering tight enclosures even more crucial.

Applying the generic approach of evaluating the Lagrange remainder term of equation 109 using Interval Arithmetic provides large over-approximation due to the multiple dependencies in x.

The wider the linearization error interval, the less likely it is that the linearized observations can contribute to contracting the guaranteed state set.

In the following we show that by explicitly evaluating the error between the nonlinear observation equation 107 and its linearization, exploiting monotonicity, tighter bounds can be obtained.

The explicit linearization error interval is given by

$$[\epsilon_r] = \|[\mathbf{x}]\| - \|\mathrm{mid}([\mathbf{x}])\| - \frac{\partial r}{\partial \mathbf{x}}([\mathbf{x}] - \mathrm{mid}([\mathbf{x}]))$$

To verify monotonicity of equation 111 with respect to [x], consider the interval-valued gradient

$$\left[\frac{\partial \epsilon_r}{\partial \mathbf{x}}\right] = ([\mathbf{x}]^T[\mathbf{x}])^{-1/2}[\mathbf{x}]^T - \frac{\partial r}{\partial \mathbf{x}} \qquad (111)$$

$$= \frac{[\mathbf{x}^T]}{\|[\mathbf{x}]\|} - \frac{\mathrm{mid}([\mathbf{x}])^T}{\|\mathrm{mid}([\mathbf{x}])\|} \qquad (112)$$

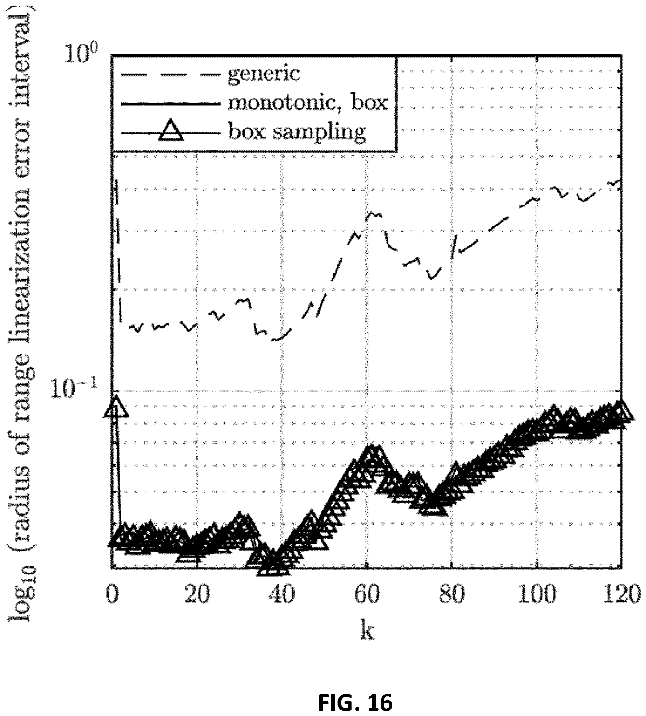

Geometrically, this is the difference between two unit vectors. The expression (111) is thus piecewise monotonic, since the signs of the elements of (112) are constant over subintervals of [x]. Since $x \in \mathbb{R}^3$, the number of these subintervals is at most $2^3$, corresponding to at most 27 unique vertices. By evaluating equation (111) for each of these vertices, an exact enclosure of $[\epsilon_r]$ can be computed. To quantify the benefit of exploiting piecewise monotonicity, we compute the interval with both approaches and compare their respective radii. **Figure 16** displays this measure over the course of a benchmark mission (see section 6.4) along with an inner approximation of the interval obtained by evaluating equation (111) for a large number of samples drawn from the *a priori* state C-zonotope interval enclosure.

Note that the generic scheme yields interval radii up to four times as large as the scheme exploiting piecewise monotonicity, which in turn closely approximates the interval obtained by sampling.

### 6.4. Simulations

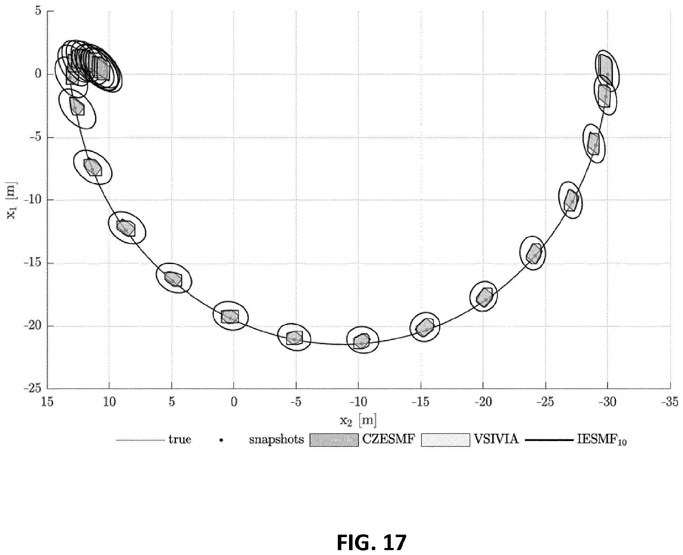

We evaluated the filter on a benchmark UAS maneuver. It consists of two UAS, a leader and a follower. The follower changes its relative position from the right to the left of the x axis on a circular trajectory, see **figure 17.** We track the relative position of both agents at 1 Hz. Simulated GNSS and ranging observations are contaminated with recorded observation errors. For GNSS observations, these are obtained from zero baseline measurements of two low-cost single frequency GPS receivers. Ranging observations errors are obtained form two static UWB ranging beacons placed at a known distance.

### 6.4. 1. Set volumes

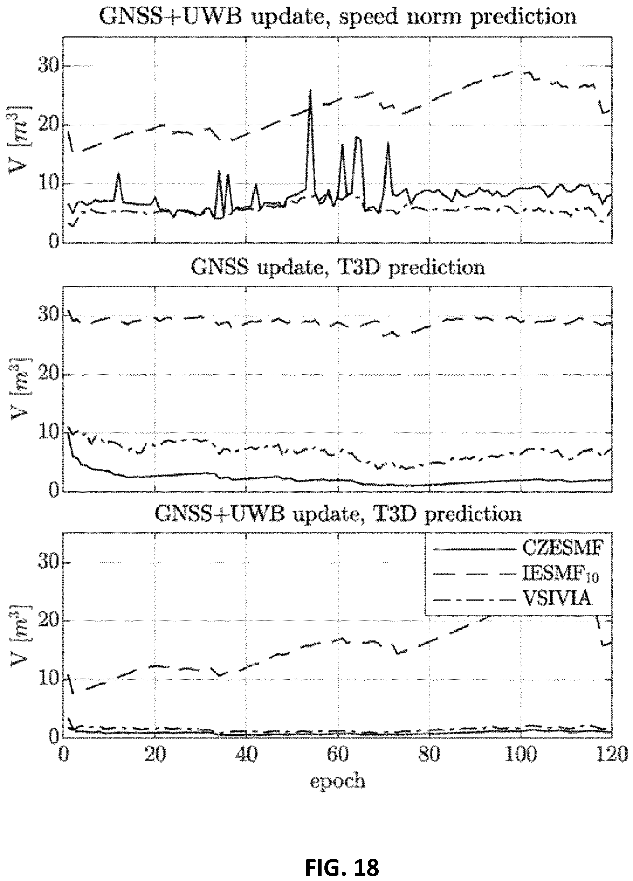

In all three scenarios, the CZESMF filter provides smaller set volumes than both the IESMF (Iterated Extended Set-membership Filter) and VSIVIA (Vector implementation of SIVIA algorithm). We also evaluated the benefit of using T3D observations for propagation, compared to the coarse velocity norm-bound model. As **figure 18** shows, C-zonotope volumes can be reduced by almost an order of magnitude by using carrier phase information in the propagation step.

### 6.5. Sensitivity to satellite constellations

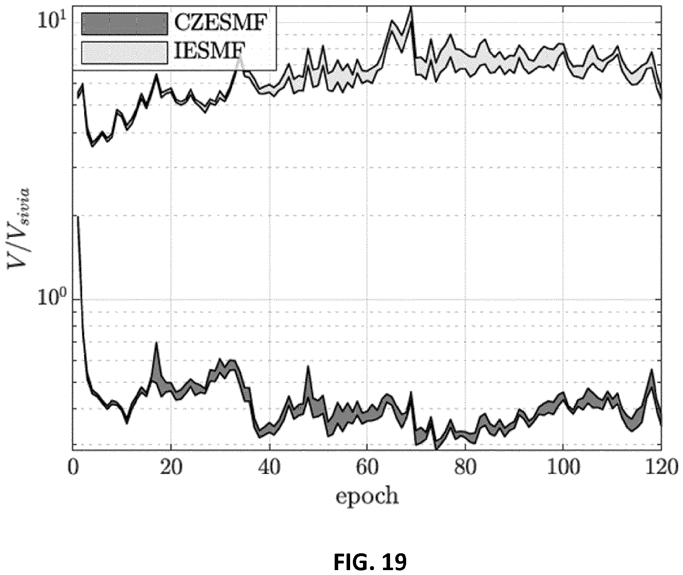

The achievable size and shape of relative position enclosures depend on the baseline-satellite geometry, as captured by the familiar Dilution of Precision (DOP) accuracy measure. It is thus of interest to know whether the relative conservativeness of the presented set-membership filters is robust with respect to variation in satellite constellations. We performed simulations of the benchmark maneuver over a set of randomly selected GPS orbit records. Satellite positions have been computed from a spline fit of the first two minutes of each orbit record. **Figure 19** shows the resulting relative position set volumes of the CZESMF and the IESMF normalized with the subpaving volume obtained by VSIVIA. After an initial transition, the CZESMF shows less conservatism than VSIVIA over all simulations and very little variations with respect to GNSS orbits. The IESMF is significantly more conservative, with similarly low sensitivity to satellite orbits. These simulations provide some confidence that the observed superior tightness of the enclosures computed by the CZESMF can be expected to carry over to an online implementation of the filter.

### 7. Conclusion

The set state estimation method described above for nonlinear systems based on C-zonotopes robustly outperforms (in terms of set volumes) a nonlinear offline set estimator based on VSIVIA as well as a recent fast ellipsoidal set state estimator in a simulation scenario.

The proposed filter can be applied to a wide variety of estimation problems, including Simultaneous Localization And Mapping (SLAM), an exciting perspective in light of the current interest in safe visual localization of road vehicles.

**Appendix A: Approximating a 2-dimensional or 3-dimensional ball with a C-zonotope**

To approximate a ball of radius r centered at c, we compute an approximation in H-rep and convert it to a C-zonotope.

Given a vector of angles $\theta = (\theta_1, \theta_2, \ldots, \theta_l)$ evenly spaced in the interval $\left[-\frac{\pi}{2}, \frac{\pi}{2}\right]$ and $\phi = (\phi_1, \phi_2, \ldots, \phi_l)$ evenly spaced on $[0, 2\pi]$ wherein $\theta$ is the zenith angle and $\phi$ is the azimuth angle and $l$ is a complexity parameter, we compute for each combination of angles $(\theta_i, \phi_j)$ a corresponding normal vector

$$\mathbf{n}_{i,j} = \begin{pmatrix} \sin\theta_i \cos\phi_j \\ \sin\theta_i \sin\phi_j \\ \cos\theta_i \end{pmatrix} \qquad (A.1)$$

Each of these normal vectors define a half-space. We can then readily write the corresponding polytope in H-rep

$$\begin{bmatrix} \mathbf{n}_{1,1}^T \\ \mathbf{n}_{1,2}^T \\ \mathbf{n}_{2,1}^T \\ \vdots \\ \mathbf{n}_{l,l}^T \end{bmatrix} \mathbf{x} \leq r \begin{pmatrix} 1 \\ 1 \\ 1 \\ \vdots \\ 1 \end{pmatrix} \qquad (A.2)$$

and convert it to G-rep. using the method given in "Constrained zonotopes: A new tool for set-based estimation and fault detection", by J.K. Scott et al.

In two dimensions, the same approach is performed over a single set of angles $\theta = (\theta_1, \theta_2, \ldots, \theta_l)$ evenly spaced on $[0, 2\pi]$.

**Claims**

1. Method, carried out by a processing unit, for estimating a constrained zonotope enclosing a motion state of at least one mobile target, the method comprising:

   a) linearizing a nonlinear transition model at an element of a first constrained zonotope ($Z_x(t_{k-1})$) enclosing the motion state at a first moment ($t_{k-1}$), so as to produce a linear transition model,
   b) computing transition linearization errors at different elements of the first constrained zonotope ($Z_x(t_{k-1})$), wherein a transition linearization error at a given element of the first constrained zonotope is a difference between an output resulting from applying the nonlinear transition model to the given element and an output resulting from applying the linear transition model to the given element,
   c) computing a second constrained zonotope that contains all the linearization errors,
   d) propagating (102) the first constrained zonotope so as to obtain an a priori constrained zonotope ($\hat{Z}_x(t_k)$) enclosing the motion state at a second moment ($t_k$) after the first moment ($t_{k-1}$), wherein the a priori constrained zonotope ($\hat{Z}_x(t_k)$) is a linear projection of a hypercube, the hypercube being subject to at least one linear constraint, and wherein the propagation of the first constrained zonotope comprises:

   - applying the linear transition model to the first constrained zonotope so as to produce a third constrained zonotope, and
   - summing the second constrained zonotope and the third constrained zonotope,

e) updating (104) the a priori constrained zonotope ($\hat{Z}_x(t_k)$) so as to obtain an a posteriori constrained zonotope ($Z'_x(t_k)$) enclosing the motion state at the second moment ($t_k$), wherein updating the a priori constrained zonotope comprises applying an observation model to the a priori constrained zonotope and to observation data of the mobile target acquired by at least one sensor.

2. Method of the preceding claim, wherein the element at which the nonlinear transition model is linearized is a center of a smallest interval enclosure containing the first constrained zonotope.

3. Method of any of the preceding claims, further comprising linearizing a nonlinear observation model at an element of the first constrained zonotope or the a priori zonotope, so as to produce a linear observation model, wherein the observation model used at step e) is the linear observation model produced.

4. Method of the preceding claim, wherein the element at which the nonlinear observation model is linearized is a center of a smallest interval enclosure containing the a priori zonotope.

5. Method of any of claims 3 and 4, further comprising:

   - computing observation linearization errors at different elements of the first constrained zonotope or the a priori zonotope, wherein an observation linearization error at a given element of the first constrained zonotope or the a priori zonotope is a difference between an output resulting from applying the nonlinear observation model to the given element and an output resulting from applying the linear observation model to the given element,
   - computing a fourth constrained zonotope ($Z([\varepsilon_h(t_k)])$) that contains all the observation linearization errors computed, wherein the a posteriori constrained zonotope ($Z'_x(t_k)$) depends on the fourth constrained zonotope.

6. Method according to any of the preceding claims, wherein the observation data of the mobile target has been acquired at a third moment different from the second moment, and wherein the method further comprises:

   - inflating the fourth constrained zonotope ($Z([\varepsilon_h(t_k)])$) so as to obtain an inflated constrained zonotope ($Z([\varepsilon'])$) forming a strip in the state space and taking into account all possible variations of the motion state between the second moment and the third moment, and possibly taking into account measurement noise induced by the sensor,
   - computing the a posteriori constrained zonotope ($Z'_x(t_k)$) as an intersection between the a priori constrained zonotope ($\hat{Z}_x(t_k)$) and the inflated constrained zonotope ($Z([\varepsilon'])$).

7. Method of any of the preceding claims, further comprising:

   - determining a complexity level of the a posteriori constrained zonotope ($Z'_x(t_k)$),
   - if the complexity level is greater than a threshold, applying a reduction process to the a posteriori constrained zonotope ($Z'_x(t_k)$) so as to obtain an a posteriori zonotope ($Z_x(t_k)$) having a lower complexity than and containing the a posteriori zonotope ($Z'_x(t_k)$) before the reduction.

8. Method of any of the preceding claims, further comprising using the a posteriori constrained zonotope ($Z'_x(t_k)$) as first constrained zonotope and using the second moment as first moment in a subsequent execution of steps a) to e).

9. Method of any of the preceding claims, further comprising

   - computing a maximum time interval between the first moment and a moment at which the observation data has been acquired by the sensor,
   - if the maximum time interval is greater than a predetermined duration, applying the linear transition model to the predetermined constrained zonotope so as to produce the a priori constrained zonotope, else using the predetermined constrained zonotope as the a priori constrained zonotope.

10. Method of any of the preceding claims, wherein the observation data comprises at least one of the following data acquired by a GNSS receiver: a pseudo-range, a carrier phase acquired, a range between the mobile target and another mobile target.

11. Method of any of the preceding claims, wherein the motion data includes motion data of the mobile target relative to another mobile target.

**12.** Method of any of the preceding claims, wherein the first constrained zonotope is computed using a Vector Set Inverter Via Interval Analysis algorithm.

**13.** Computer program product comprising instructions which, when the program is executed by a computer, cause the computer to carry out the method of any of the preceding claims.


**Patentansprüche**

**1.** Verfahren, das von einer Verarbeitungseinheit ausgeführt wird, zum Schätzen eines eingeschränkten Zonotops, das einen Bewegungszustand mindestens eines mobilen Ziels einschließt, wobei das Verfahren umfasst:

a) Linearisieren eines nicht linearen Übergangsmodells an einem Element eines ersten eingeschränkten Zonotops ($Z_x(t_{k-1})$), das den Bewegungszustand zu einem ersten Zeitpunkt ($t_{k-1}$) einschließt, um ein lineares Übergangsmodell zu ergeben,
b) Berechnen von Übergangslinearisierungsfehlern an verschiedenen Elementen des ersten eingeschränkten Zonotops ($Z_x(t_{k-1})$), wobei ein Übergangslinearisierungsfehler an einem gegebenen Element des ersten eingeschränkten Zonotops eine Differenz zwischen einer Ausgabe, die sich aus dem Anwenden des nicht linearen Übergangsmodells auf das gegebene Element ergibt, und einer Ausgabe, die sich aus dem Anwenden des linearen Übergangsmodells auf das gegebene Element ergibt, ist,
c) Berechnen eines zweiten eingeschränkten Zonotops, das alle Linearisierungsfehler enthält,
d) Verbreiten (102) des ersten eingeschränkten Zonotops, um ein eingeschränktes A-priori-Zonotop ($\hat{Z}_x(t_k)$) zu erzielen, das den Bewegungszustand zu einem zweiten Zeitpunkt ($t_k$) nach dem ersten Zeitpunkt ($t_{k-1}$) einschließt, wobei das eingeschränkte A-priori-Zonotop ($\hat{Z}_x(t_k)$) eine lineare Projektion eines Hyperkubus ist, wobei der Hyperkubus mindestens einer linearen Einschränkung unterliegt, und wobei die Verbreitung des ersten eingeschränkten Zonotops umfasst:

- Anwenden des linear Übergangsmodells auf das erste eingeschränkte Zonotop, um ein drittes eingeschränktes Zonotop zu erzeugen, und
- Summieren des zweiten eingeschränkten Zonotops und des dritten eingeschränkten Zonotops,

e) Aktualisieren (104) des eingeschränkten A-priori-Zonotops ($\hat{Z}_x(t_k)$), um ein eingeschränktes A-posteriori-Zonotop ($Z'_x(t_k)$) zu erzielen, das den Bewegungszustand zu dem zweiten Zeitpunkt ($t_k$) einschließt, wobei das Aktualisieren des eingeschränkten A-priori-Zonotops das Anwenden eines Beobachtungsmodells auf das eingeschränkte A-priori-Zonotop und auf Beobachtungsdaten des mobilen Ziels, die von mindestens einem Sensor erfasst werden, umfasst.

**2.** Verfahren nach dem vorhergehenden Anspruch, wobei das Element, an dem das nicht lineare Übergangsmodell linearisiert wird, ein Mittelpunkt einer kleinsten Intervallzeitspanne ist, die das erste eingeschränkte Zonotop enthält.

**3.** Verfahren nach einem der vorhergehenden Ansprüche, ferner umfassend das Linearisieren eines nicht linearen Beobachtungsmodells an einem Element des ersten eingeschränkten Zonotops oder des A-priori-Zonotops, um ein lineares Beobachtungsmodell zu erzeugen, wobei das Beobachtungsmodell, das in Schritt e) verwendet wird, das erzeugte lineare Beobachtungsmodell ist.

**4.** Verfahren nach dem vorhergehenden Anspruch, wobei das Element, an dem das nicht lineare Beobachtungsmodell linearisiert wird, ein Mittelpunkt einer kleinsten Intervallzeitspanne ist, die ein A-priori-Zonotop enthält.

**5.** Verfahren nach einem der Ansprüche 3 und 4, ferner umfassend:

- Berechnen von Beobachtungslinearisierungsfehlern an verschiedenen Elementen des ersten eingeschränkten Zonotops oder des A-priori-Zonotops, wobei ein Beobachtungslinearisierungsfehler an einem gegebenen Element des ersten eingeschränkten Zonotops oder des A-priori-Zonotops eine Differenz zwischen einer Ausgabe, die sich aus dem Anwenden des nicht linearen Beobachtungsmodells auf das gegebene Element ergibt, und einer Ausgabe, die sich aus dem Anwenden des linearen Beobachtungsmodells auf das gegebene Element ergibt, ist,
- Berechnen eines vierten eingeschränkten Zonotops ($Z([\varepsilon_h(t_k)])$), das alle berechneten Beobachtungslinearisierungsfehler enthält, wobei das eingeschränkte A-priori-Zonotop ($Z'_x(t_k)$) von dem vierten eingeschränkten Zonotop abhängt.

**6.** Verfahren nach einem der vorhergehenden Ansprüche, wobei die Beobachtungsdaten des mobilen Ziels zu einem dritten Zeitpunkt erfasst wurden, der anders als der zweite Zeitpunkt ist, und wobei das Verfahren ferner umfasst:

- Erweitern des vierten eingeschränkten Zonotops ($Z([\varepsilon_h(t_k)])$), um ein erweitertes eingeschränktes Zonotop ($Z([\varepsilon'])$) zu erzielen, das einen Streifen im Zustandsraum bildet und alle möglichen Variationen des Bewegungszustands zwischen dem ersten Zeitpunkt und dem dritten Zeitpunkt berücksichtigt, und möglicherweise Messrauschen berücksichtigt, das durch den Sensor induziert wird,
- Berechnen des eingeschränkten A-posteriori-Zonotops ($Z'_x(t_k)$) als eine Schnittmenge zwischen dem eingeschränkten A-priori-Zonotop ($\hat{Z}_x(t_k)$) und dem erweiterten eingeschränkten Zonotop ($Z([\varepsilon'])$).

**7.** Verfahren nach einem der vorhergehenden Ansprüche, ferner umfassend:

- Bestimmen eines Komplexitätsniveaus des eingeschränkten A-posteriori-Zonotops ($Z'_x(t_k)$),
- falls das Komplexitätsniveau größer als eine Schwelle ist, Anwenden eines Reduzierungsprozesses auf das eingeschränkte A-posteriori-Zonotop ($Z'_x(t_k)$), um ein A-posteriori-Zonotop ($Z_x(t_k)$) zu erzielen, das eine geringere Komplexität als ein A-posteriori-Zonotop ($Z'_x(t_k)$) vor der Reduzierung aufweist und dieses enthält.

**8.** Verfahren nach einem der vorhergehenden Ansprüche, ferner umfassend das Verwenden des eingeschränkten A-posteriori-Zonotops ($Z'_x(t_k)$) als erstes eingeschränktes Zonotop und das Verwenden des zweiten Zeitpunktes als ersten Zeitpunkt in einer nachfolgenden Ausführung der Schritte a) bis e).

**9.** Verfahren nach einem der vorhergehenden Ansprüche, ferner umfassend

- Berechnen eines maximalen Zeitintervalls zwischen dem ersten Zeitpunkt und einem Zeitpunkt, zu dem die Beobachtungsdaten von dem Sensor erfasst wurden,
- falls das maximale Zeitintervall größer als eine vorbestimmte Dauer ist, Anwenden des linearen Übergangsmodells auf das vorbestimmte eingeschränkte Zonotop, um das eingeschränkte A-priori-Zonotop zu ergeben, und ansonsten Verwenden des vorbestimmten eingeschränkten Zonotops als eingeschränktes A-priori-Zonotop.

**10.** Verfahren nach einem der vorhergehenden Ansprüche, wobei die Beobachtungsdaten mindestens eines der folgenden Datenelemente umfasst, die von einem GNSS-Empfänger erfasst werden: eine Pseudostrecke, eine erfasste Trägerphase, eine Strecke zwischen dem mobilen Ziel und einem anderen mobilen Ziel.

**11.** Verfahren nach einem der vorhergehenden Ansprüche, wobei die Bewegungsdaten die Bewegungsdaten des mobilen Ziels im Verhältnis zu einem anderen mobilen Ziel umfassen.

**12.** Verfahren nach einem der vorhergehenden Ansprüche, wobei das erste eingeschränkte Zonotop unter Verwendung eines Algorithmus zur Vektormengenumrichtung über Intervallanalyse berechnet wird.

**13.** Computerprogrammprodukt, umfassend Anweisungen, die wenn das Programm von einem Computer ausgeführt wird, bewirken, dass der Computer das Verfahren nach einem der vorhergehenden Ansprüche ausführt.

**Revendications**

**1.** Procédé, exécuté par une unité de traitement, pour estimer un zonotope restreint incluant un état de mouvement d'au moins une cible mobile, le procédé comprenant :

a) linéariser un modèle de transition non linéaire sur un élément d'un premier zonotope restreint ($Z_x(t_{k-1})$) qui inclut l'état de mouvement à un premier instant ($t_{k-1}$) pour donner un modèle de transition linéaire,
b) calculer des erreurs de linéarisation de transition sur différents éléments du premier zonotope restreint ($Z_x(t_{k-1})$), dans lequel une erreur de linéarisation de transition sur un élément donné du premier zonotope restreint est une différence entre une sortie résultant de l'application du modèle de transition non linéaire à l'élément donné et une sortie résultant de l'application du modèle de transition linéaire à l'élément donné,
c) Calculer un deuxième zonotope restreint contenant toutes les erreurs de linéarisation,

d) diffuser (102) le premier zonotope restreint pour obtenir un zonotope restreint a priori $(\hat{Z}_x(t_k))$ qui inclut l'état de mouvement à un second moment ($t_k$) après le premier moment ($t_{k-1}$), le zonotope a priori restreint étant $(\hat{Z}_x(t_k))$ est une projection linéaire d'un hypercube, ledit hypercube étant soumis à au moins une contrainte linéaire, et dans lequel la propagation du premier zonotope restreint comprend

- appliquer le modèle de transition linéaire au premier zonotope restreint afin de créer un troisième zonotope restreint, et
- sommation du deuxième zonotope restreint et du troisième zonotope restreint,

e) mettre à jour (104) le zonoto a priori restreint $(\hat{Z}_x(t_k))$pour obtenir un zonotop a posteriori restreint (Z'$_x$ ($t_k$)) qui inclut l'état de mouvement au second instant ($t_k$), dans lequel la mise à jour du zonotop a priori restreint comprend l'application d'un modèle d'observation au zonotop a priori restreint et aux données d'observation de la cible mobile détectées par au moins un capteur.

2. Procédé selon la revendication précédente, dans lequel l'élément au niveau duquel le modèle de transition non linéaire est linéarisé est un point médian d'un intervalle de temps le plus petit contenant le premier zonotope restreint.

3. Procédé selon l'une quelconque des revendications précédentes, comprenant en outre la linéarisation d'un modèle d'observation non linéaire sur un élément du premier zonotope restreint ou du zonotope a priori afin de générer un modèle d'observation linéaire, dans lequel le modèle d'observation utilisé à l'étape e) est le modèle d'observation linéaire généré.

4. Procédé selon la revendication précédente, dans lequel l'élément auquel le modèle d'observation non linéaire est linéarisé est un point médian d'un intervalle de temps le plus petit contenant un zonotope a priori.

5. Procédé selon l'une quelconque des revendications 3 et 4, comprenant en outre :

- calculer des erreurs de linéarisation d'observation sur différents éléments du premier zonotope restreint ou du zonotope a priori, dans lequel une erreur de linéarisation d'observation sur un élément donné du premier zonotope restreint ou du zonotope a priori est une différence entre une sortie résultant de l'application du modèle d'observation non linéaire à l'élément donné et une sortie résultant de l'application du modèle d'observation linéaire à l'élément donné,
- Calcul d'un quatrième zonotope restreint $(Z([\varepsilon_h(t_k)]))$qui contient toutes les erreurs de linéarisation d'observation calculées, le zonotope restreint a priori (Z'$_x$ ($t_k$)) dépendant du quatrième zonotope restreint.

6. Procédé selon l'une quelconque des revendications précédentes, dans lequel les données d'observation de la cible mobile ont été acquises à un troisième instant qui est différent du deuxième instant, et dans lequel le procédé comprend en outre :

- Extension du quatrième zonotope restreint $(Z([\varepsilon_h(t_k)]))$pour obtenir un zonotope restreint étendu $(Z([\varepsilon']))$ qui forme une bande dans l'espace d'état et prend en compte toutes les variations possibles de l'état de mouvement entre le premier moment et le troisième moment, et prend éventuellement en compte le bruit de mesure induit par le capteur,
- Calculer le zonotope a posteriori restreint (Z'$_x$ ($t_k$)) comme une intersection entre le zonotope a priori restreint $(\hat{Z}_x(t_k))$ et le zonotope restreint étendu $(Z([\varepsilon']))$.

7. Procédé selon l'une quelconque des revendications précédentes, comprenant en outre :

- déterminer un niveau de complexité du zonotop A-posteriori restreint (Z'$_x$ ($t_k$)),
- si le niveau de complexité est supérieur à un seuil, appliquer un processus de réduction au zonotope a posteriori restreint (Z'$_x$ ($t_k$)) afin d'obtenir un zonotope a posteriori (Z$_x$ ($t_k$)) qui présente une complexité inférieure à celle d'un zonotope a posteriori (Z'$_x$ ($t_k$)) avant la réduction et qui contient celui-ci.

8. Procédé selon l'une quelconque des revendications précédentes, comprenant en outre l'utilisation du zonotope restreint A-posteriori (Z'$_x$ ($t_k$)) comme premier zonotope restreint et l'utilisation du deuxième instant comme premier instant dans une exécution ultérieure des étapes a) à e).

9. Procédé selon l'une quelconque des revendications précédentes, comprenant en outre

- calculer un intervalle de temps maximal entre le premier moment et un moment où les données d'observation ont été acquises par le capteur,
- si l'intervalle de temps maximal est supérieur à une durée prédéterminée, appliquer le modèle de transition linéaire au zonotope restreint prédéterminé pour donner le zonotope a priori restreint, et sinon utiliser le zonotope restreint prédéterminé comme zonotope a priori restreint.

10. Procédé selon l'une quelconque des revendications précédentes, dans lequel les données d'observation comprennent au moins l'un des éléments de données suivants, détectés par un récepteur GNSS : une pseudo-distance, une phase porteuse détectée, une distance entre la cible mobile et une autre cible mobile.

11. Procédé selon l'une quelconque des revendications précédentes, dans lequel les données de mouvement comprennent les données de mouvement de la cible mobile par rapport à une autre cible mobile.

12. Procédé selon l'une quelconque des revendications précédentes, dans lequel le premier zonotope restreint est calculé en utilisant un algorithme de redressement d'ensemble de vecteurs par analyse d'intervalles.

13. Produit programme d'ordinateur comprenant des instructions qui, lorsque le programme est exécuté par un ordinateur, amènent l'ordinateur à exécuter le procédé selon l'une quelconque des revendications précédentes.

1

2 ───── 4

**FIG. 1**

100 → Initialization

102 → Propagation

104 → Update

106 → Reduction

**FIG. 2**

**FIG. 3**

**FIG. 4**

**FIG. 5**

**FIG. 6**

**FIG. 7**

**FIG. 8**

**FIG. 9**

EP 3 736 608 B1

**FIG. 10**

**FIG. 11**

38

**FIG. 12**

**FIG. 13**

**FIG. 14**

**FIG. 15**

**FIG. 16**

FIG. 17

**FIG. 18**

**FIG. 19**

**EP 3 736 608 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **REGO.** *Set-based state estimation of nonlinear systems using constrained zonotopes and interval arithmetic*
- **J.K. SCOTT.** *Constrained zonotopes: A new tool for set-based estimation and fault detection*
- **E. SCHOLTE.** *A nonlinear set-membership filter for online applications*
- **J.K. SCOTT.** *Constrained zonotopes: a new tool for set-based estimation and fault detection*